# FASCICULE DE BREVET EUROPEEN

(11) **EP 3 266 148 B1**
(45) Date de publication et mention de la délivrance du brevet: **12.12.2018**
(21) Numéro de dépôt: 16710269.8
(22) Date de dépôt: 04.03.2016
(51) Int. Cl.: H04L 9/08, H04L 9/32, H04L 29/06

(54) **DISPOSITIF ET PROCÉDÉ D'ADMINISTRATION D'UN SERVEUR DE SÉQUESTRES NUMÉRIQUES**
VORRICHTUNG UND VERFAHREN ZUR ADMINISTRATION EINES DIGITALEN HINTERLEGUNGSSERVERS
DEVICE AND METHOD FOR ADMINISTERING A DIGITAL ESCROW SERVER

(30) Priorité: 04.03.2015 FR 1551830
(43) Date de publication de la demande: 10.01.2018
(73) Titulaire: INRIA - Institut National de Recherche en Informatique et en Automatique, 78150 Le Chesnay (FR)
(72) Inventeur: WALLRICH, Bertrand, 54115 Battigny (FR)
(74) Mandataire: Cabinet Netter
(86) Numéro de dépôt international: PCT/FR2016/050503
(87) Numéro de publication internationale: WO 2016/139435

(56) Documents cités:
- STANISLAW JARECKI ET AL: "Probabilistic Escrow of Financial Transactions with Cumulative Threshold Disclosure", 2 août 2005 (2005-08-02), FINANCIAL CRYPTOGRAPHY AND DATA SECURITY : 9TH INTERNATIONAL CONFERENCE, FC 2005, ROSEAU, THE COMMONWEALTH OF DOMINICA, FEBRUARY 28 - MARCH 3, 2005; [LECTURE NOTES IN COMPUTER SCIENCE;;LNCS], SPRINGER-VERLAG, BERLIN/HEIDELBERG, PAGE(S) 172 - 187, XP019011803, ISBN: 978-3-540-26656-3 le document en entier
- STANISLAW JARECKI ET AL: "Handcuffing Big Brother: an Abuse-Resilient Transaction Escrow Scheme", 17 avril 2004 (2004-04-17), ADVANCES IN CRYPTOLOGY - EUROCRYPT 2004; [LECTURE NOTES IN COMPUTER SCIENCE;;LNCS], SPRINGER-VERLAG, BERLIN/HEIDELBERG, PAGE(S) 590 - 608, XP019005042, ISBN: 978-3-540-21935-4 abrégé Chapter 5: "VTE Scheme with Automatic Threshold Disclosure"; pages 605-606
- Zhenfu Cao: "A threshold key escrow scheme based on public key cryptosystem", Science in China Series E: Technological Sciences, 1 août 2001 (2001-08-01), pages 441-448, XP055248266, Beijing DOI: 10.1007/BF02916697 Extrait de l'Internet: URL:http://rd.springer.com/content/pdf/10. 1007/BF02916697.pdf [extrait le 2016-02-08]

## Description

L'invention concerne la sécurité informatique en général, et plus particulièrement la confidentialité de données numériques.

Pour assurer la confidentialité de données numériques, on a l'habitude de les chiffrer. Les données numériques chiffrées sont inutilisables en l'état : elles doivent être préalablement déchiffrées.

Le chiffrement consiste à appliquer une fonction cryptographique aux données numériques, par bloc ou par messages, en utilisant une valeur particulière en tant que paramètre. Cette valeur particulière correspond à ce que l'on appelle une clé de chiffrement dans la technique.

Sous réserve de connaître la fonction cryptographique utilisée, ce qui est généralement le cas lorsque les algorithmes sont publics, il faut et il suffit de connaître la valeur d'une clé de déchiffrement pour déchiffrer les données numériques.

La valeur de cette clé de déchiffrement est telle qu'elle ne peut pas être aisément retrouvée. Généralement on utilise une clé de valeur importante, ce qui rend pratiquement impossible le recouvrement des données chiffrées sans connaître la valeur de la clé, en particulier par tentatives successives.

Dans le cas d'une fonction cryptographique asymétrique, la clé de déchiffrement, que l'on désigne généralement par "clé privée", diffère de la clé de chiffrement, que l'on désigne alors par "clé publique". On dit parfois que ces clés sont asymétriques. Dans le cas d'une fonction cryptographique symétrique, la clé de chiffrement permet aussi le déchiffrement. On dit alors que la clé est symétrique.

La confidentialité des données numériques chiffrées repose sur la capacité à conserver la clé de déchiffrement secrète. La valeur de la clé de déchiffrement est conservée secrètement par le destinataire des données numériques, ou diffusée de manière strictement limitative à des tiers autorisés à accéder à ces données.
Les clés de déchiffrement, et plus généralement toutes données numériques confidentielles, peuvent être conservées de manière sécurisée par un tiers de confiance qui en limite l'accès. Il s'agit en particulier d'un serveur de séquestres numériques, un séquestre correspondant à une forme chiffrée des données numériques confidentielles.

La clé de déchiffrement d'un séquestre numérique peut être conservée secrètement par une unique personne. Généralement, il s'agit d'un destinataire du séquestre, en particulier son propriétaire, ou l'administrateur du serveur. Dans ce cas cependant, les données séquestrées peuvent être perdues si la personne en question n'est plus en mesure d'indiquer la valeur de la clé de déchiffrement.

Cela se révèle généralement assez critique puisque les données chiffrées sont des données sensibles et importantes. Leur disponibilité pour leur propriétaire, individu ou entreprise, est essentielle. Il en résulte que l'administrateur du serveur de séquestres doit montrer une disponibilité sans faille.

La fonction d'administrateur d'un serveur de séquestres est parfois assurée par plusieurs personnes, chacune de ces personnes ayant connaissance de la valeur de la clé de déchiffrement. Cela nuit à la confidentialité des données : chaque administrateur peut déchiffrer un séquestre. Les risques sur la confidentialité des séquestres se trouvent augmentés : les administrateurs du serveur de séquestres sont plus fréquemment la cible d'attaques informatiques dans la mesure où une attaque couronnée de succès peut permettre d'accéder aux données de plusieurs séquestres.

Une autre pratique consiste à établir une convention pour la génération de la clé de déchiffrement, permettant de la reconstituer en cas de perte. Dans les faits, la connaissance de la convention et des données nécessaires à son application équivaut à la connaissance de la clé elle-même. On introduit une faille dans la sécurité des données, en ce que la connaissance de la convention permet de déterminer l'ensemble des clés de chiffrement conformes à la convention.

Une autre pratique encore consiste à prévoir une clé de recouvrement pour les données chiffrées. On utilise un algorithme de chiffrement tel que les données chiffrées puissent être déchiffrées soit par la clé de chiffrement, conservée par l'utilisateur, soit par la clé de recouvrement, confiée à un tiers de confiance.

Dans ce cas cependant, chaque tiers peut recouvrer seul les données chiffrées. Et on multiplie les failles de sécurité du fait d'une diffusion plus large des valeurs de clé permettant le déchiffrement des données En outre, une même valeur de clé de recouvrement est souvent utilisée pour des clés de chiffrement correspondant à des utilisateurs différents. Et la durée de validité d'une clé de recouvrement est généralement bien plus grande que celle des clés de chiffrement utilisateurs.

Une variante consiste à répartir la clé de déchiffrement entre plusieurs tiers de confiance : il faut réunir l'ensemble des parties de clé des tiers pour obtenir la clé de recouvrement. La sécurité se trouve grandement améliorée dans la mesure où il faut connaître et attaquer chacun des tiers pour espérer récupérer la clé de chiffrement. Toutefois, on est ramené à une situation où le défaut d'une seule personne, en l'espèce un tiers de confiance, empêche le recouvrement du séquestre.

Une variante consiste à partager cette clé de recouvrement entre tiers de confiance, selon un algorithme de partage de secret, de type Shamir par exemple ou équivalent. La clé de recouvrement peut être reconstruite par l'ensemble des tiers, ou par un sous-ensemble, aussi appelé "quorum" de ces tiers. Cependant une vulnérabilité persiste : une fois la clé de recouvrement reconstruite, cette dernière peut être divulguée. Il n'y a alors plus besoin du quorum d'administrateurs pour avoir accès à l'ensemble des données chiffrées.

S. Jarecki, V. Shmatikov, "Probabilistic Escrow of Financial Transactions with Cumulative Threshold Disclosure" expose un système informatique où un nombre minimum de machines peut coopérer, à l'aide de la création d'un polynôme propre à chaque utilisateur, pour obtenir un séquestre d'une ou plusieurs transactions financières.

S. Jarecki, V. Shmatikov, "Handcuffing Big Brother: an Abuse-Resilient Transaction Escrow Scheme"; et Z. Cao, "A threshold key escrow scheme based on public key cryptosystem", exposent l'arrière-plan technique concernant le séquestre de messages sécurisé.

L'invention vient améliorer la situation.

On propose une machine d'administration pour un serveur de séquestres numériques comprenant au moins une interface de communication, de la mémoire stockant une liste de valeurs entières correspondant chacune à une machine respective d'un groupe de machines d'administration du serveur de séquestres numériques, et un jeu de paramètres relatif à une fonction de chiffrement pour réaliser un séquestre. La machine comprend en outre un calculateur capable d'exécuter une fonction polynomiale de degré inférieur ou égal au nombre de machines du groupe de machines d'administration, la fonction polynomiale étant propre à la machine d'administration, une fonction d'initialisation agencée pour appeler la fonction polynomiale avec chaque valeur entière de la liste pour obtenir une liste rangée de premières valeurs secrètes, construire au moins un message comprenant, pour chaque machine d'administration homologue du groupe de machines d'administration, au moins la première valeur secrète correspondant à la valeur entière de cette machine d'administration homologue, en réponse à au moins un message comprenant, pour chaque machine d'administration homologue du groupe de machines d'administration, au moins une seconde valeur secrète obtenue de l'appel de la fonction polynômiale de cette machine d'administration homologue sur la valeur entière de la machine d'administration, construire une valeur secrète résultante propre à la machine d'administration à partir des premières et secondes valeurs secrètes. Le calculateur est en outre capable d'exécuter une fonction de recouvrement agencée pour traiter une partie au moins d'un séquestre numérique en utilisant la valeur secrète résultante propre à la machine d'administration et des valeurs secrètes résultantes propres aux machines d'administration homologues du groupe de machines d'administration.

La machine proposée est capable de recouvrer un séquestre en coopérant avec les machines homologues du groupe de machines d'administration, le cas échéant avec seulement un sous-ensemble des machines de ce groupe. Par "recouvrer un séquestre" on désigne le processus qui conduit à déchiffrer ce séquestre sans connaissance de la clé de déchiffrement.

Le recouvrement du séquestre se fait sans reconstruction d'une éventuelle clé de déchiffrement. Chaque machine d'administration peut recouvrer le séquestre dès lors qu'elle a coopéré avec un nombre suffisant de machines d'administration homologues.

Le nombre de machines devant coopérer en vue de recouvrer un séquestre est paramétrable.

Lors du recouvrement d'un séquestre, les machines du groupe des machines d'administration opèrent de manière analogue les unes aux autres. La machine proposée et les machines homologues n'ont pas besoin de se connaître les unes les autres. Aucune clé maîtresse n'est utilisée, ce qui améliore considérablement la sécurité des séquestres.

Certains paramètres de déchiffrement des séquestres peuvent être stockés sur le serveur de séquestres lui-même, par exemple chiffré avec une clé propre à chaque machine d'administration. En cas de corruption du serveur, la confidentialité des séquestres reste assurée, tout comme l'identité des administrateurs et les moyens de déchiffrer les séquestres.

Un utilisateur peut déposer un séquestre. Cet utilisateur ne peut pas recouvrer lui-même son séquestre. Ceci évite toute attaque basée sur une usurpation d'identité pour le séquestre. Le serveur de séquestres n'a pas à maintenir une clé partielle ou temporaire, ni sur disque ni en mémoire vive.

Toutes les opérations de déchiffrement sont exécutées sur la machine d'administration.

La valeur secrète utilisée pour le recouvrement est propre à la machine d'administration. Elle est en partie définie par des valeurs secrètes relatives aux autres machines d'administration.

On propose également une infrastructure d'échange et de traitement de séquestres numériques comprenant un serveur de séquestres et un groupe de machines d'administration comprenant au moins deux machines d'administration du type de celle proposée ci-dessus pour le serveur de séquestres, les deux machines d'administration étant homologues l'une de l'autre.

On propose encore un procédé d'administration d'un serveur de séquestres numériques comprenant les étapes suivantes : sur chaque machine d'un groupe de machines d'administration, appeler une fonction polynomiale respective de degré inférieur ou égal au nombre de machines du groupe de machines d'administration avec chaque valeur d'une liste de valeurs entières correspondant chacune à une machine respective du groupe de machines d'administration pour obtenir une liste de valeurs secrètes ; sur chaque machine du groupe de machines d'administration, construire au moins un message comprenant au moins une valeur secrète correspondant à la valeur entière d'une machine d'administration destinataire ; sur chaque machine du groupe de machines d'administration, construire une valeur secrète résultante propre à cette machine à partir des valeurs secrètes calculées, par les autres machines du groupe de machines d'administration, pour la valeur entière correspondant à la machine d'administration ; sur certaines au moins des machines du groupe de machines d'administration, déchiffrer un séquestre numérique en utilisant cette valeur secrète résultante et les valeurs secrètes résultantes de machines d'administration homologues.

On propose enfin un produit de programme informatique susceptible de coopérer avec une unité centrale d'ordinateur pour constituer une machine d'administration du type proposé ci-dessus.

D'autres caractéristiques et avantages de l'invention apparaîtront à l'examen de la description détaillée ci-après, et des dessins annexés, sur lesquels :
- La figure 1 représente un schéma fonctionnel illustrant un domaine de séquestres ;
- la figure 2 représente un schéma fonctionnel qui illustre un module serveur pour un domaine de séquestres ;
- la figure 3 représente un schéma fonctionnel qui illustre un module d'administrateur de plus haut niveau pour un domaine de séquestres ;
- la figure 4 représente un schéma fonctionnel qui illustre un module administrateur pour un domaine de séquestre ;
- la figure 5 représente un schéma fonctionnel qui illustre un module client pour un domaine de séquestre ;
- la figure 6 représente un ordinogramme qui illustre des modes opérationnels successifs d'un domaine de séquestres ;
- la figure 7 représente un ordinogramme qui illustre l'établissement d'un domaine de séquestres ;
- la figure 8 représente le domaine de la figure 1 dans un premier mode opérationnel ;
- la figure 9 représente un ordinogramme qui illustre le fonctionnement d'une machine d'administration de plus haut niveau correspondant à un premier mode opérationnel d'un domaine de séquestres ;
- la figure 10 représente un ordinogramme qui illustre le fonctionnement d'un serveur de séquestre correspondant au premier mode opérationnel d'un domaine de séquestres ;
- la figure 11 représente un ordinogramme qui illustre le fonctionnement d'une machine d'administration correspondant au premier mode opérationnel d'un domaine de séquestres ;
- la figure 12 est analogue à la figure 10 ;
- la figure 13 est analogue à la figure 11 ;
- la figure 14 représente un ordinogramme qui détaille une étape de la figure 13 ;
- la figure 15 représente un ordinogramme qui illustre le fonctionnement d'un serveur de séquestres correspondant à un second mode opérationnel d'un domaine de séquestre ;
- la figure 16 représente un schéma fonctionnel qui illustre le domaine de la figure 1 dans un second mode opérationnel ;
- la figure 17 représente un ordinogramme qui illustre le fonctionnement d'une machine client correspondant au second mode opérationnel d'un domaine de séquestre ;
- la figure 18 représente un schéma fonctionnel illustrant le domaine de séquestres de la figure 1 dans un troisième mode opérationnel ;
- la figure 19 représente un ordinogramme qui illustre le troisième mode opérationnel d'un domaine de séquestres ;
- la figure 20 représente un ordinogramme qui illustre le fonctionnement d'une machine d'administration correspondant au troisième mode opérationnel d'un domaine de séquestres ;
- la figure 21 est analogue à la figure 20 ;
- la figure 22 représente un ordinogramme qui illustre le fonctionnement d'un serveur de séquestres correspondant au troisième mode opérationnel d'un domaine de séquestres ; et
- la figure 23 représente un ordinogramme qui illustre le fonctionnement d'une machine d'administration correspondant au troisième mode opérationnel d'un domaine de séquestres.

Les dessins annexés contiennent des éléments de caractère certain et pourront par conséquent non seulement servir à compléter l'invention, mais aussi contribuer à sa définition, le cas échéant.

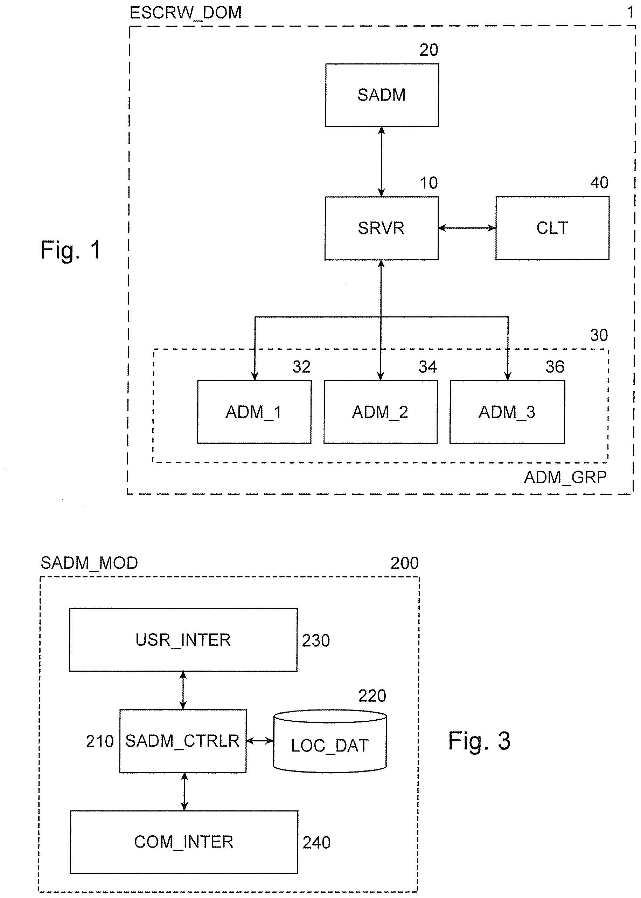

La figure 1 montre une infrastructure informatique d'échange et de traitement de séquestres numériques organisée en un domaine 1. Ici, le domaine 1 est en outre organisé de manière à stocker des séquestres numériques.

De façon générale, un "séquestre numérique", ou "séquestre" en bref, correspond à une forme chiffrée d'une suite d'octets de taille quelconque stockée, ou destinée à l'être, de manière sécurisée sur une machine tierce. La suite d'octets originale est parfois désignée "secret" dans la technique. Un secret peut par exemple correspondre à une chaîne de caractères, un chiffre, une suite de chiffres, un fichier informatique ou une liste de fichiers.

Le domaine 1 est organisé sur une infrastructure, matérielle et logicielle, de réseau informatique. Le réseau de base comprend des machines, éléments matériels et logiciels du réseau, capables de communiquer les unes avec les autres selon un protocole réseau quelconque, par exemple sur la base de socket, protocole de transfert hypertexte, ou protocole http, éventuellement dans la version sécurisée (protocole https) ou encore protocole RPC, pour "Remote Procédure Call" ou appel de procédure distante en français, ou plus généralement tout protocole d'échange de données structuré.

Les machines du domaine 1 communiquent les unes avec les autres selon un protocole permettant l'échange de données entre les machines du domaine 1. Le protocole peut être encodé de manière quelconque du moment que les machines du domaine 1 peuvent échanger des données les unes avec les autres, par exemple en ASN.1, JSON ou encore XML.

Le domaine de séquestres 1 comprend un serveur de séquestres 10 qui, d'une part, stocke les séquestres numériques, et, d'autre part, contrôle en partie au moins le domaine 1. Le serveur 10 peut être réparti sur plusieurs machines, matérielles et/ou logicielles. En particulier, le serveur 10 peut comprendre une première machine dédiée au stockage des séquestres numériques et une seconde machine, différente, dédiée au contrôle du domaine 1.

Le domaine 1 comprend en outre une machine d'administration de plus haut niveau, ou machine d'administration supérieure 20, capable de communiquer avec le serveur 10. La machine d'administration supérieure 20 contrôle le serveur 10.

Le domaine 1 comprend encore un groupe de machines d'administration 30, comprenant ici une première machine d'administration 32, une seconde machine d'administration 34 et une troisième machine d'administration 36. Chaque machine du groupe 30 est capable de communiquer. Les machines du groupe 30 agissent sur les séquestres numériques.

Le domaine 1 comprend enfin une ou plusieurs machines clientes 40 qui sont chacune capables de communiquer avec le serveur 10, en particulier afin d'y déposer un ou plusieurs séquestres numériques.

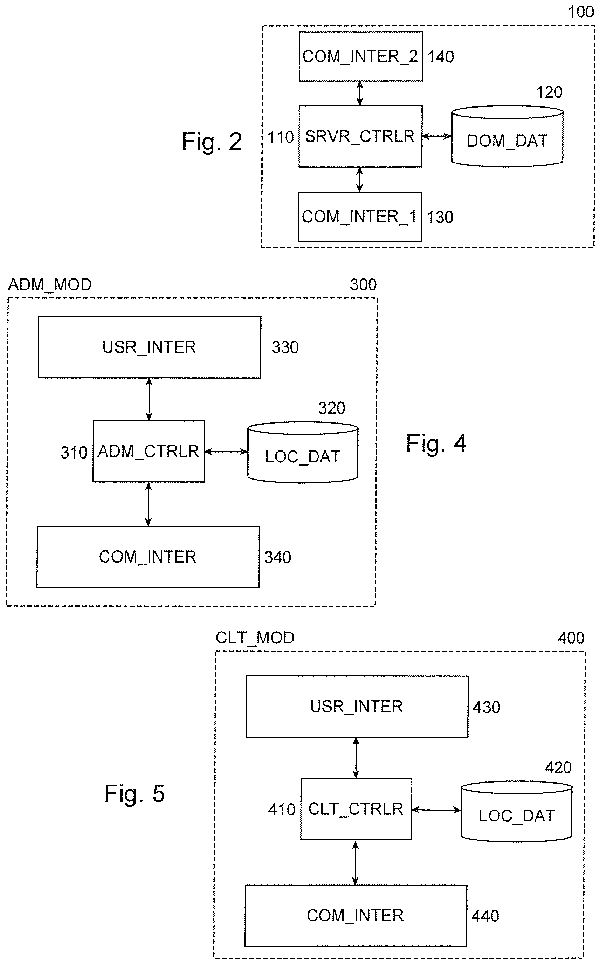

La figure 2 montre un module serveur 100 à usage par exemple pour le serveur 10 de la figure 1.

Le module serveur 100 comprend un contrôleur principal 110 et une structure de stockage de données 120. Le contrôleur 110 est capable de lire, écrire et traiter des données dans la structure de stockage 120. La structure de ce stockage 120 maintient en particulier un ensemble de données de gestion relatif au domaine de séquestre, y compris des données relatives au paramétrage du séquestre.

Le module serveur 100 comprend en outre au moins une première interface de communication 130 qui peut être commandée par le contrôleur 110 pour communiquer avec les machines d'un domaine séquestre, par exemple le domaine 1 de la figure 1.

Ici, le module serveur 100 comprend en outre une seconde interface de communication 140 qui peut être commandée par le contrôleur 110 pour échanger des données exclusivement avec une machine de stockage de séquestres numériques. En particulier, le contrôleur 110 est capable de faire émettre à la seconde interface 140 un ou plusieurs messages comprenant des séquestres numériques destinés à être stockés sur la machine en question

La machine de stockage de séquestres peut être agencée pour se connecter périodiquement au contrôleur 110 par l'intermédiaire de la seconde interface de communication 140 afin de récupérer des requêtes du module serveur 100 en attente et de transmettre à ce module des réponses aux requêtes relatives à la précédente connexion. Dans cette configuration, la machine de stockage de séquestres correspond à ce que l'on appelle parfois un "serveur froid", désigné le plus souvent par le terme équivalent en anglais de "cold server".

Le module serveur 100 peut être implémenté sous la forme d'un serveur logiciel web doté de bibliothèques de type JSON (pour "Java Script Object Notation" ou notation objet Javascript en français) exécuté par une unité centrale d'ordinateur. La structure de stockage 120 peut être organisée dans de la mémoire de stockage de l'ordinateur en question.

La figure 3 montre un module super administrateur 200 à usage par exemple dans la machine super administrateur 20 de la figure 1.

Le module super administrateur comprend un contrôleur principal 210 et une structure de stockage 220 qui mémorise les données relatives à la fonction de super administrateur.

Le contrôleur 210 peut lire, écrire et traiter les données dans la structure de stockage 220.

Le module super administrateur 200 comprend en outre une interface utilisateur 230, par exemple de type graphique, qui interagit avec le contrôleur principal 210.

Le module administrateur comprend en outre une interface de communication 220 qui peut être commandée par le contrôleur principal 210 pour émettre et recevoir des données au travers d'un domaine de séquestre, par exemple le domaine 1 de la figure 1.

Le module super administrateur 200 peut prendre la forme d'une application Java qui s'exécute sur une unité centrale d'ordinateur. La structure de stockage 220 peut être organisée dans de la mémoire de stockage de l'ordinateur en question.

La figure 4 montre un module administrateur qui peut être utilisé dans une machine d'administration, par exemple chacune de la première machine 32, de la seconde machine 34 et de la troisième machine 36 du groupe d'administration 30 de la figure 1.

Le module d'administration 300 comprend un contrôleur principal 310 et une structure de stockage de données 320 avec laquelle le contrôleur peut interagir, en particulier, pour lire, écrire et traiter des données.

Le module administrateur comprend une interface utilisateur capable d'interagir avec le contrôleur principal 310. Par exemple, l'interface utilisateur est de type graphique.

Le module d'administration 300 comprend en outre une interface de communication 340 qui peut être commandée par le contrôleur 310 pour échanger des données au travers d'une infrastructure de séquestres, par exemple le domaine 1 de la figure 1.

Le module administrateur peut être réalisé sous la forme d'une application Java qui s'exécute sur une unité centrale d'ordinateur. La structure de stockage 320 peut être organisée dans une mémoire de stockage de cette unité centrale.

La figure 5 montre un module client 400 à usage par exemple dans la machine client 40 du domaine 1 de la figure 1.

Le module client 400 comprend un contrôleur 430 et une structure de stockage de données 440 avec laquelle le contrôleur principal 410 peut interagir pour lire, écrire et stocker des données.

Le module client 400 comprend en outre une interface utilisateur 430 qui interagit avec le contrôleur principal 410. L'interface utilisateur 430 peut être de type graphique.

Le module client 400 comprend en outre une interface de communication 440 qui peut être commandée par le contrôleur principal 410 pour échanger des données à travers une infrastructure de séquestre, en particulier, le domaine 1 de la figure 1.

Le module client 400 peut être réalisé sous la forme d'une application Java exécutée sur une unité centrale d'ordinateurs. La structure de stockage 420 peut être organisée dans la mémoire de stockage de cette unité de calcul.

Dans une forme de réalisation, certains au moins des modules serveur 100, super administrateur 200, administrateur 300 et client 400 sont intégrés dans une même application, par exemple Java, qui s'exécute sur une machine comme un module particulier selon les droits associés dans le domaine à un identifiant de l'utilisateur de la machine en question.

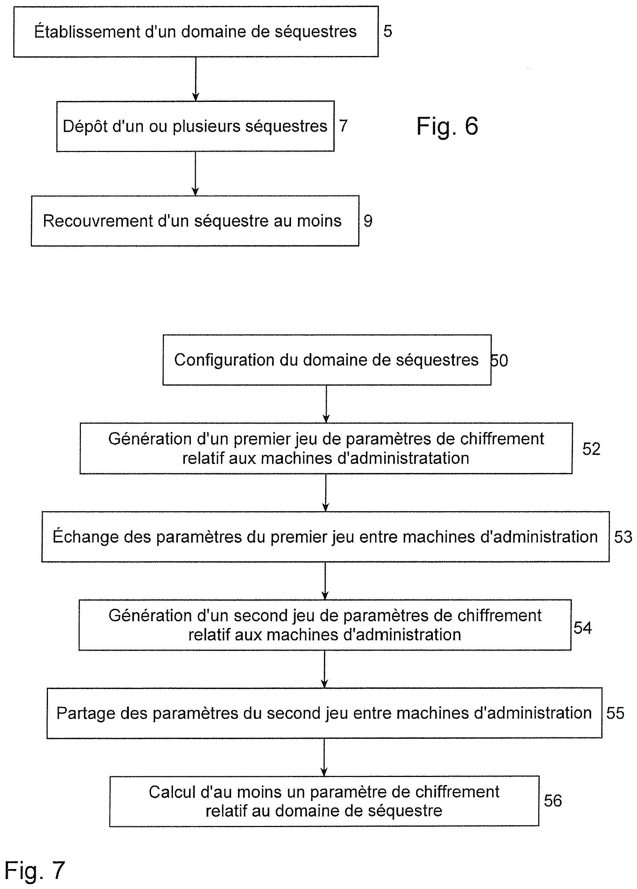

La figure 6 illustre généralement différents modes opérationnel d'une infrastructure de séquestres numérique, en particulier le domaine 1 de la figure 1.

Selon un premier mode opérationnel, illustré par le bloc 5, certains au moins des éléments logiciels et matériels d'une infrastructure de réseau informatique coopèrent en vue de l'établissement d'un domaine de séquestres.

Selon un second mode opérationnel, illustré par le bloc 7, certains au moins des éléments logiciels et matériels de l'infrastructure coopèrent afin de permettre l'enregistrement d'un séquestre sur un serveur de l'infrastructure, par exemple le serveur 10 de la figure 1.

Selon un troisième mode opérationnel, illustré par le bloc 9, certains au moins des éléments matériels et logiciels de l'infrastructure coopèrent en vue de recouvrer l'un au moins des séquestres stockés sur le serveur de l'infrastructure, c'est-à-dire de permettre le déchiffrement du séquestre numérique en l'absence de certaines au moins des données utilisées pour le chiffrement du séquestre numérique en question.

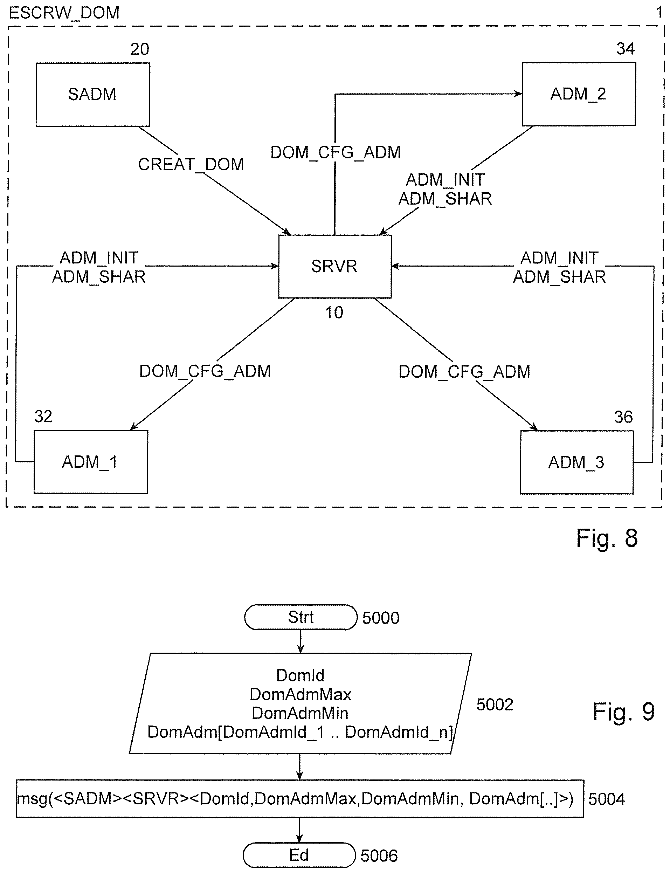

Les figures 7 et 8 détaillent la mise en place d'une infrastructure de séquestre telle que le domaine 1 de la figure 1 par exemple.

L'établissement de l'infrastructure débute par une phase de configuration, représentée ici par le bloc 50. Il s'agit en particulier de fixer certains au moins des paramètres nécessaires au fonctionnement de l'infrastructure, au moins dans une phase initiale. Ceci implique au minimum de définir, parmi les éléments matériels et logiciels d'une infrastructure réseau, un contrôleur d'infrastructure, un serveur de stockage de séquestres, éventuellement rassemblés en une seule machine, et un groupe de machines d'administration pour les séquestres. Cette définition peut impliquer une intervention utilisateur.

La configuration de l'infrastructure de séquestres peut être réalisée depuis une machine particulière de l'infrastructure réseau, telle qu'une machine d'administration de plus haut niveau, par exemple la machine 20 de la figure 8. Des données relatives à la configuration de l'infrastructure sont maintenues sur le contrôleur, auquel les machines d'administration peuvent accéder. Sur l'exemple de la figure 8, ces données sont maintenues sur le serveur de séquestres 10, par exemple dans une structure analogue à la structure de stockage 120 de la figure 2.

Les données de configuration de l'infrastructure de séquestres peuvent être transmises au contrôleur de séquestres par la machine d'administration de plus haut niveau dans un message spécifique de création de domaine, ou message CREAT_DOM, comme cela est illustré sur la figure 8.

L'établissement de l'infrastructure de séquestres se poursuit par la génération de paramètres cryptographiques à usage dans l'infrastructure, ce qui correspond au bloc 52 de la figure 7, et par le partage de ces paramètres entre certaines au moins des machines de l'infrastructure, ce qui correspond au bloc 53 de la figure 7.

Chaque machine d'administration, par exemple chaque machine du groupe 30 de la figure 1, génère un premier jeu de paramètres cryptographiques qui lui est propre. Puis les paramètres cryptographiques du premier jeu des machines d'administration sont partagés entre les machines homologues du groupe des machines d'administration. Le partage de ces paramètres peut se faire par l'intermédiaire du contrôleur de l'infrastructure, ce qui évite aux machines d'administration d'avoir à communiquer directement les unes avec les autres. Par exemple, chaque machine d'administration transmet les données de son premier jeu de paramètres cryptographiques au contrôleur, à l'aide d'un message d'initialisation. Sur la figure 8 par exemple, chacun d'un premier poste administrateur 32, d'un second poste administrateur 34 et d'un troisième poste administrateur 36 envoie au serveur 10 un message d'initialisation administrateur, ou message ADM_INIT.

Le contrôleur de l'infrastructure de séquestres mémorise les paramètres cryptographiques reçus des machines d'administration en une collection de premiers paramètres cryptographiques, relative au groupe des machines d'administration, puis met cette collection à disposition de ces machines d'administration.

Dans le mode de réalisation illustré sur la figure 8, chacune de la première machine d'administration 32, de la seconde machine d'administration 34 et de la troisième machine d'administration 36 reçoit du serveur 10 un message contenant des données de configuration administrative du domaine 1, ou message DOM_CFG_ADM. Ces données comprennent une collection de premiers paramètres cryptographiques.

Chaque machine d'administration mémorise la collection de premiers paramètres cryptographiques. Chaque machine d'administration génère un second jeu de paramètres cryptographiques à partir de la collection de premiers paramètres cryptographiques. Ceci correspond au bloc 54 de la figure 7. Le second jeu de paramètres cryptographiques comprend des données cryptographiques propres à la machine d'administration qui l'a généré et des données cryptographiques à usage plus généralement par d'autres machines de l'infrastructure, en particulier d'autres machines d'administration.

Les paramètres du second jeu sont ensuite partagés entre les machines d'administration. Ceci correspond au bloc 55 de la figure 7. Le partage peut se faire par l'intermédiaire du contrôleur de séquestres. Sur la figure 8 par exemple, chaque machine d'administration transmet au serveur 10 un message de partage de données, ou message ADM_SHAR, qui contient les données de son second jeu de paramètres.

L'établissement de l'infrastructure de séquestres s'achève par le calcul de paramètres cryptographiques à usage dans cette infrastructure, en particulier pour le dépôt d'un séquestre, à partir de la collection de paramètres cryptographiques. Ceci correspond au bloc 56 sur la figure 7. Les paramètres cryptographiques en question comprennent en particulier une clé publique valable pour l'infrastructure de séquestres. Cette clé publique peut être mise à disposition des machines de l'infrastructure sur un serveur de l'infrastructure, typiquement le serveur de séquestres ou le contrôleur. Cette clé publique peut être utilisée pour chiffrer des données numériques en vue d'en réaliser un séquestre.

La figure 9 illustre une première fonction principale pour une machine d'administration de niveau supérieur, par exemple la machine 20 de la figure 8, à usage dans le premier mode opérationnel d'une infrastructure de séquestres. Il peut s'agir, par exemple, du fonctionnement du contrôleur principal 210 de la figure 3.

La fonction débute en une étape 5000.

À l'étape suivante 5002, la fonction reçoit un identifiant pour l'infrastructure de séquestres, ou identifiant DomId, par exemple sous la forme d'une chaîne de caractères, un nombre total de machines d'administration pour l'infrastructure, ou nombre DomAdmMax, un nombre minimal de machines d'administration nécessaires au recouvrement d'un séquestre, ou nombre DomAdmMin, et un identifiant pour chaque machine d'administration de l'infrastructure, noté génériquement DomAdm_i pour une i-ème machine, par exemple sous la forme d'une chaîne de caractères. Ces données sont stockées en mémoire, par exemple dans une structure analogue à la structure de stockage 220 de la figure 3. Les identifiants DomAdm_i peuvent être stockés dans un tableau de dimension n, où le nombre n correspond au nombre DomAdmMax. Ici il s'agit du tableau DomAdm. Ces valeurs peuvent être saisies depuis la machine d'administration de plus haut niveau, en particulier à travers une interface analogue à l'interface 230 de la figure 3.

A l'étape suivante 5004, la fonction construit un message de création d'infrastructure, par exemple un message CREAT_DOM, comprenant un identifiant de la machine hôte, ici l'identifiant SAdmId, en tant qu'émetteur, et l'identifiant d'un contrôleur de l'infrastructure en tant que destinataire, ou identifiant SRVRId. Le message contient en tant que données la chaîne DomId, le nombre DomAdmMax et le nombre DomAdmMin, ainsi qu'un tableau du type du tableau DomAdm, dont chaque élément correspond à l'identifiant d'une machine d'administration de l'infrastructure, ou analogue.

La fonction s'arrête ensuite, à l'étape 5006.

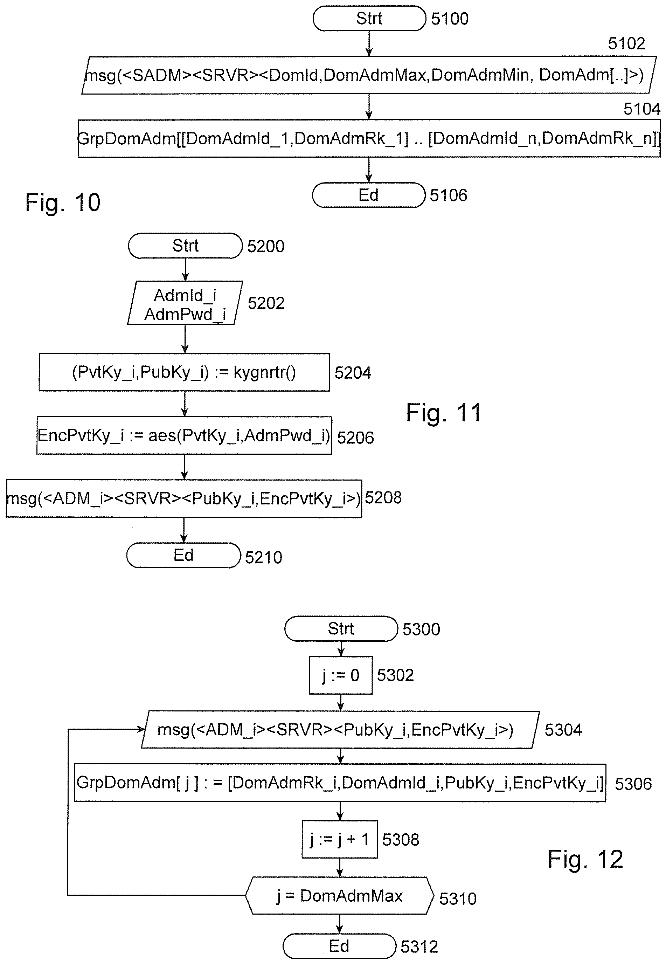

La figure 10 illustre une première fonction principale pour un contrôleur, par exemple le serveur 10 de figure 8, dans le premier mode opérationnel d'une infrastructure de séquestres. Il s'agit par exemple du fonctionnement du contrôleur 110 de la figure 2.

La fonction débute en 5100.

À l'étape suivante 5102, la fonction reçoit un message de création de domaine d'une machine d'administration de niveau supérieur, par exemple un message CREAT_DOM. Le message comprend un identifiant de domaine, par exemple la chaîne DomId, un nombre de machines d'administration, par exemple le nombre DomAdmMax, un nombre minimum de machines d'administration par exemple le nombre DomAdmMin, et une liste d'identifiants de machines d'administration, par exemple le tableau DomAdm.

À l'étape suivante 5104, la fonction stocke localement les données reçues. La fonction mémorise l'identifiant de chaque machine d'administration, noté génériquement DomAdm_i, en relation avec une valeur entière (non nulle) respective, notée génériquement valeur DomAdmRk_i.

Par exemple, la fonction remplit un tableau relatif au groupe de machines d'administration, ici un tableau DomAdmGr, dont chaque élément comprend un identifiant DomAdm_i, en relation avec une valeur DomAdmRk_i. La valeur DomAdmRk_i peut correspondre à une valeur d'index de l'identifiant DomAdm_i dans le tableau DomAdmGr. Cet index peut correspondre à l'ordre dans lequel la machine d'administration a reçu les identifiants utilisateurs. Un ordonnancement aléatoire peut également être mis en oeuvre. En complément ou en remplacement, les valeurs entières peuvent être générées aléatoirement.

La fonction s'achève ensuite en une étape 5106.

La figure 11 illustre une première fonction pour une machine d'administration, par exemple la fonction principale 310 du module d'administration 300 de la figure 4, correspondant au premier mode opérationnel d'une infrastructure du domaine. Cette première fonction est destinée à la génération d'un premier jeu de données cryptographiques.

La fonction débute en 5200.

À l'étape suivante 5202, la fonction reçoit l'identifiant DomAdmId_i d'une machine d'administration i. Ici, la fonction reçoit en outre un code dont la valeur conditionne l'accès à cette machine i. Le code est par exemple un mot de passe, que l'on note génériquement DomAdmPwd_i, par exemple sous la forme d'une chaîne de caractères, le cas échéant choisie par ou pour un utilisateur de la machine i.

À l'étape suivante 5204, la fonction génère un couple de valeurs correspondant à une clé publique, ou clé PubKy, et une clé privée, ou clé PvtKy, d'une fonction de chiffrement de type asymétrique. La clé PvtKy et la clé PubKy sont générées aléatoirement sur la machine i et sont propres à cette machine i. La fonction de chiffrement asymétrique peut être de type RSA ou El Gamal par exemple. Par exemple, la fonction génère aléatoirement un nombre entier dans un intervalle [1.. p0-2], où p0 est une valeur entière qui correspond à un paramètre commun aux machines de l'infrastructure de séquestres. La valeur générée est utilisée en tant que clé PvtKy. La fonction calcule ensuite la clé PubKy à l'aide d'une valeur génératrice g0, comprise dans l'intervalle [1.. p0-2], élevée à la puissance PvtKy et ramenée dans l'intervalle [1 ... p0_2] (modulo p0). La valeur génératrice g0 peut être commune à l'infrastructure de séquestres. Par exemple, les valeurs des paramètres p0 et g0 peuvent être codées dans la fonction pour éviter d'échanger ces valeurs entre machines de l'infrastructure. On améliore ainsi la sécurité de l'infrastructure de séquestres. En variante, les valeurs des paramètres p0 et g0 peuvent être propres à chaque machine d'administration. Dans ce cas, ces valeurs sont communiquées aux machines homologues du groupe des machines d'administration.

À l'étape suivante 5206, la clé PvtKy est chiffrée au moyen d'une fonction de type symétrique, par exemple de type AES, avec un code propre à la machine i en tant que paramètre, par exemple la chaîne DomAdmPwd_i. On obtient une valeur chiffrée de la clé PvtKy, ou valeur EncPvtKy. La clé PvtKy, la clé PubKy et la valeur EncPvtKy sont propres à la machine i.

A l'étape suivante 5208, la fonction construit un message à destination d'un contrôleur de l'infrastructure, par exemple le serveur 10 de la figure 8, en indiquant l'identifiant de la machine d'administration DomAdm_i comme émetteur. Le message comporte les données correspondant à la clé PubKy_i générée sur la machine i et à la valeur EncPvtKy_i chiffrée pour la machine i. Il s'agit par exemple d'un message ADM_INIT sur la figure 8.

La fonction s'arrête ensuite en 5210.

La figure 12 illustre une seconde fonction pour un contrôleur, par exemple le serveur 10 de la figure 8, à usage dans le premier mode opérationnel d'une infrastructure de séquestres. Il s'agit par exemple du fonctionnement du contrôleur principal 210 de la figure 3.

La fonction débute en 5300.

À l'étape suivante 5302, la fonction commence une structure de boucle en initialisant un compteur j.

À l'étape suivante 5304, la fonction reçoit un message d'une machine d'administration i de l'infrastructure. Le message comprend deux valeurs correspondant respectivement à une valeur de clé publique propre à la machine i, ici la clé PubKy_i, et à une valeur chiffrée pour cette machine i d'une clé privée propre à la machine i, ici la valeur EncPvtKy_i. Il s'agit par exemple d'un message ADM_INIT.

À l'étape suivante 5306, la fonction stocke les données de l'étape précédente. Ici les données sont rassemblées en tant qu'élément d'index j d'un tableau GrpDomAdm. La fonction ajoute aux données reçue la valeur entière DomAdmRk_i de la machine d'administration i.

À l'étape suivante 5308, le compteur j est incrémenté.

À l'étape suivante 5310, la fonction vérifie que le compteur j a atteint sa valeur finale. Cette valeur correspond au nombre DomAdmMax. La fonction vérifie qu'elle a reçu et traité un message d'initialisation de chacune des machines d'administration de l'infrastructure de séquestres.

Si oui, alors la fonction se termine à l'étape suivante 5312. Sinon, la fonction retourne à l'étape 5304 où elle attend un message d'initialisation d'une autre machine d'administration.

Les étapes 5300 à 5312 correspondent au stockage, sur le contrôleur de l'infrastructure de séquestres, de données cryptographiques pour l'échange sécurisé de données entre machines d'administration, directement ou par l'intermédiaire du contrôleur. Ces données cryptographiques comprennent, pour chaque machine d'administration, une valeur respective à usage en tant que clé publique. Ici, ces données cryptographiques comprennent en outre une valeur chiffrée, pour la machine en question, de la clé privée correspondant à la clé publique Cette dernière peut devenir optionnelle, dans la mesure où certaines au moins des machines d'administration peuvent conserver leur clé privée sans l'adresser au contrôleur ou aux machines d'administrations homologues.

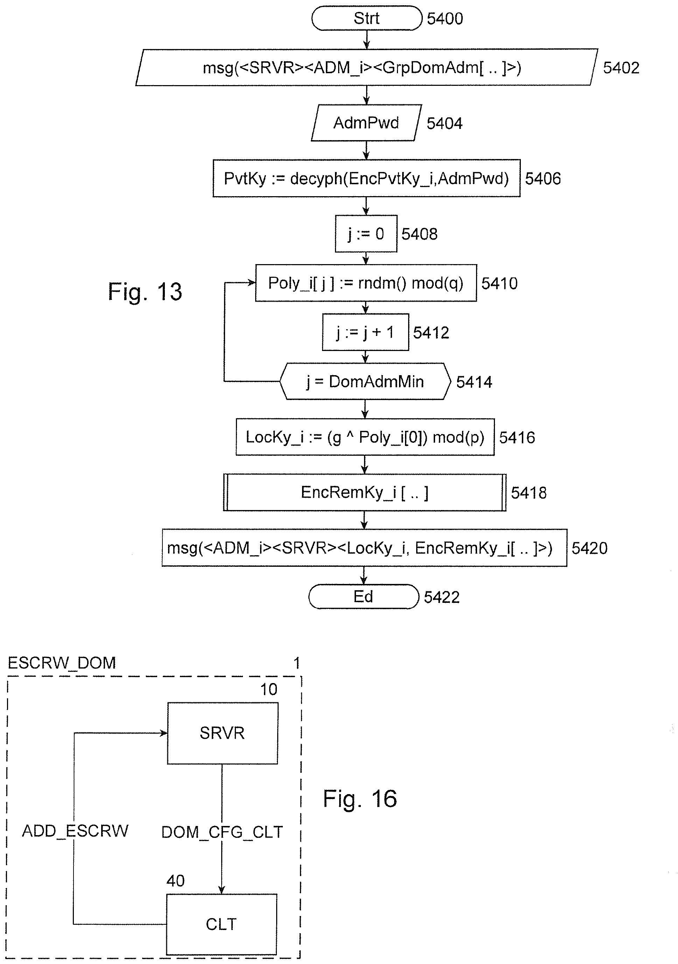

La figure 13 illustre une seconde fonction principale pour une machine d'administration, par exemple l'une des première 32, seconde 34 et troisième 36 machines d'administration de la figure 8, correspondant au premier mode opérationnel d'une infrastructure de séquestre. Cette seconde fonction correspond à l'échange de paramètres d'un premier jeu de paramètres cryptographiques entre machines d'administration. Il s'agit par exemple du fonctionnement du contrôleur principal 310 de la figure 4.

La fonction débute en une étape 5400.

A l'étape suivante 5402, la fonction reçoit un message d'un contrôleur de l'infrastructure comprenant des données relatives à chaque machine d'administration i de l'infrastructure de séquestres. En particulier, les données comprennent, pour chaque machine d'administration i, un identifiant de machine, par exemple l'identifiant DomAdmId_i, une valeur de clé publique propre à cette machine i, par exemple la clé PubKy_i, une valeur chiffrée pour cette machine i d'une clé privée générée par cette machine i, par exemple la valeur clé EncPvtKy_i, et un rang DomAdmRk_i de cette machine. Les données peuvent être rassemblées dans un tableau analogue au tableau GrpDomAdm.

À l'étape suivante 5404, la fonction reçoit un code qui conditionne l'accès à la machine, par exemple la chaîne DomAdmPwd.

Ceci permet, à l'étape suivante 5406, de déchiffrer la valeur EncPvtKy_i correspondant à la machine i. On obtient la clé PvtKy_i relative à cette machine i.

Les étapes 5400 à 5406 correspondent à la récupération, par une machine d'administration particulière, des données de son premier jeu de paramètres cryptographiques, en particulier sa valeur de clé publique et une version chiffrée de sa valeur de clé privée. Cela permet d'utiliser des équipements physiquement différents en tant que machine d'administration i entre les étapes 52 et 54. Cela évite en outre à la machine i de mémoriser des données cryptographiques sur un équipement, ce qui améliore grandement la sécurité. Toutefois, ces étapes sont optionnelles dans la mesure où ces données cryptographiques peuvent être mémorisées de façon sûre sur un équipement particulier.

Dans les étapes suivantes, la fonction génère des données définissant un polynôme de degré correspondant au nombre DomAdmMin moins un. Les coefficients du polynôme sont générés aléatoirement dans un espace d'entiers discret dont la dimension, représentée ici par l'entier q, est commune aux machines d'administration de l'infrastructure de séquestres. Le polynôme est propre à la machine qui l'a générée. Les machines homologues du groupe de machines d'administration n'utilisent pas nécessairement le même polynôme.

Ceci se fait en initialisant d'abord un compteur de boucle j à une valeur nulle dans une étape 5408.

À l'étape suivante 5410, la fonction mémorise en tant qu'élément d'index j d'un tableau Poly_i le résultat d'une fonction de génération aléatoire à valeurs dans un intervalle [1 .. q-2].

Le compteur j est incrémenté à l'étape suivante 5412. À l'étape suivante 5414, la fonction vérifie que le compteur j a atteint sa valeur finale, c'est-à-dire le nombre DomAdmMin. La fonction vérifie qu'un coefficient a été généré pour chaque terme du polynôme.

Si oui, alors la fonction se poursuit à l'étape suivante 5416. Sinon, la fonction retourne à l'étape 5410 où elle génère une valeur pour le coefficient de degré supérieur puis le stocke dans le tableau Poly_i.

À l'étape 5416, on calcule une valeur de clé publique locale propre à la machine d'administration i, ou clé LocKy_i, à partir des données du tableau Poly_i. On utilise ici une fonction de chiffrement de type El Gamal. La clé LocKy_i est calculée avec la valeur génératrice g de l'infrastructure, dans l'intervalle [1.. p-2], en utilisant le terme du polynôme de degré zéro, ici l'entier d'index zéro du tableau Poly_i. La valeur LocKy_i est propre à la machine d'administration i considérée.

A l'étape suivante 5418, la fonction calcule une collection de valeurs secrètes relatives aux autres machines d'administration du domaine. Une valeur secrète pour une machine d'administration générique k est chiffrée avec la clé PubKy_k de cette machine d'administration, par exemple telle qu'elle a été reçue à l'étape 5402. Les valeurs secrètes chiffrées sont rassemblées ici dans un tableau EncRemKy_i. Par exemple, la valeur secrète pour la machine d'administration k est mémorisée en tant qu'élément d'index k-1 dans ce tableau.

À l'étape suivante 5420, la fonction construit un message à destination du serveur destiné au partage des données cryptographiques, ou message ADM_SHAR. Le message en question comprend la valeur de la clé locale LocKy_i de la machine hôte i et un tableau de valeurs secrètes, le cas échéant chiffrées, correspondant au tableau EncRemKy_i.

La fonction s'arrête à l'étape suivante 5422.

Le chiffrement des valeurs secrètes permet d'en assurer la confidentialité. Autrement dit, seule la machine d'administration peut accéder au secret calculé pour elle par la machine d'administration i. Cela permet de rassembler confidentiellement les valeurs secrètes sur un serveur de l'infrastructure. Toutefois, le chiffrement peut devenir optionnel dans le cas où l'on peut assurer d'une autre façon la confidentialité du secret, par exemple dans le cadre d'un échange de valeurs secrètes directement entre machines d'administration.

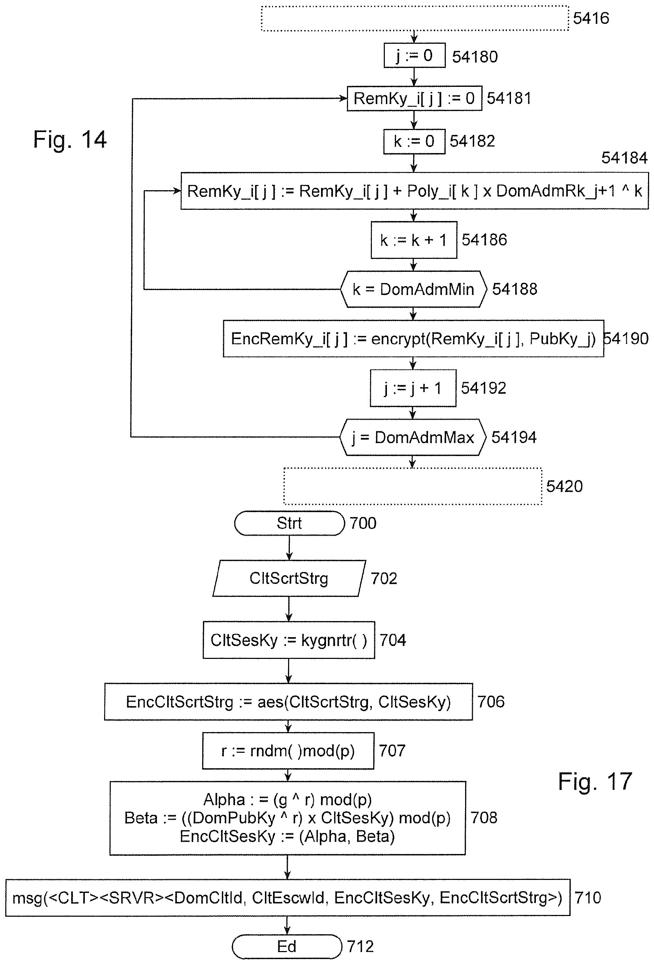

La figure 14 détaille l'étape 5418 de la figure 13.

Dans une étape 54180, la fonction commence une structure de boucle en initialisant un premier compteur j à la valeur 0 (zéro).

À l'étape suivante 54181, la fonction crée un tableau de calcul RemKy_i et initialise l'élément d'index j de ce tableau à la valeur 0 (zéro).

À l'étape suivante 54182, la fonction commence une seconde structure de boucle, imbriquée dans la première, en initialisant un second compteur k à la valeur 0 (zéro).

À l'étape suivante 54184, la fonction mémorise dans le tableau de calcul RemKy_i, en tant qu'élément d'index j, la valeur correspondant à cet index j auquel on ajoute le coefficient de degré k du polynôme de signature, c'est-à-dire la valeur entière d'index k dans le tableau Poly_i, que multiplie le rang de la machine d'administration j+1, ou DomAdmRk_j+1 à la puissance k.

À l'étape suivante 54186, la fonction incrémente le compteur de boucle k, avant de vérifier, dans une étape 54188, que ce compteur de boucle k a atteint sa valeur finale, correspondant au nombre DomAdmMin.

Si oui, alors la fonction se poursuit à l'étape suivante 54190. Sinon, la fonction retourne à l'étape 54184.

Les étapes 54182 à 54188 correspondent au calcul d'une valeur-résultat de la fonction polynômiale qui sert de fonction signature à la machine d'administration i pour une valeur particulière. Cette valeur particulière correspond à la valeur entière DomAdmRk_j d'une machine d'administration j de l'infrastructure. La valeur résultat est générée sur une machine d'administration particulière, sur la base d'une fonction propre à cette machine. Cette valeur peut être vue comme une valeur signature. La valeur résultat est en outre une valeur secrète. Cette valeur résultat est calculée sur la base d'une valeur entière correspondant de manière univoque à une machine homologue du groupe des machines d'administration. Elle peut être vue comme une partie d'une valeur secrète propre à cette machine homologue.

À l'étape 54190, la fonction chiffre la valeur secrète correspondant à une machine d'administration j, par exemple la valeur d'index j dans le tableau de clé RemKy_i, avec la clé PubKy_j de cette machine j. Le chiffrement utilise ici une fonction de type El Gamal, dont les paramètres sont communs aux machines d'administration de l'infrastructure de séquestres, par exemple les paramètres g_0 et p_0 décrits en relation avec l'étape 5204. De préférence, les valeurs de ces paramètres sont codées dans la fonction.

A l'étape suivante 54192, on incrémente le premier compteur de boucle j, et l'on vérifie, en une étape 54194 que le compteur de boucle j a atteint la valeur DomAdmMax.

Si oui, alors la fonction s'arrête, ce qui correspond à la fin de l'étape 5418 de la figure 13. Sinon, on retourne à l'étape 54181.

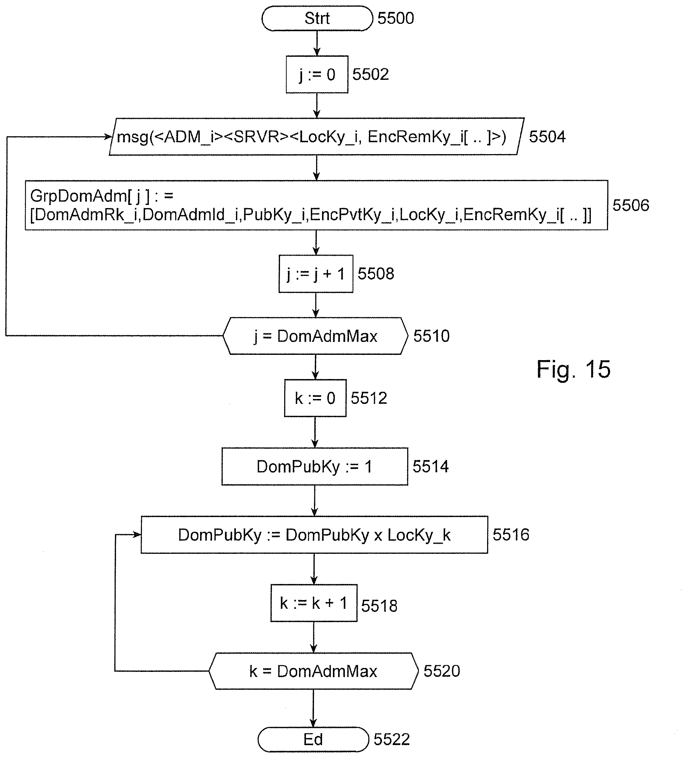

La figure 15 illustre une troisième fonction principale pour un contrôleur, par exemple le serveur 10 de la figure 8, dans le premier mode opérationnel d'une infrastructure de séquestres. Cette troisième fonction correspond à une phase d'échange de paramètres de chiffrement.

La fonction débute en une étape 5500.

À l'étape suivante 5502, la fonction initie une structure de boucle initialisant un premier compteur j à la valeur 0 (zéro).

À l'étape suivante 5504, le contrôleur reçoit un message d'une machine d'administration i, par exemple un message ADM_SHAR. Le message contient une valeur de signature de la machine d'administration i, par exemple une valeur LocKy_i, et une valeur chiffrée EncRemKy_i_j d'une valeur secrète RemKy_i_j de la machine i calculée pour chaque autre machine d'administration j, à partir de la valeur entière correspondant à cette dernière. Ici, le chiffrement a été réalisé avec la clé PubKy_j de chaque machine j. Par exemple, ces valeurs sont rassemblées dans un tableau indexé EncRemKy_i.

À l'étape suivante 5506, on stocke en tant qu'élément d'index j d'un tableau GrpDomAdm une valeur correspondant à la valeur entière de la machine i, par exemple la valeur DomAdmRk_i, un identifiant de cette machine, par exemple l'identifiant DomAdmId_i, une valeur de clé publique propre à cette machine, ou clé PubKy_i, une valeur chiffrée d'une valeur de clé privée générée par cette machine, par exemple la valeur EncPvtKy_i, la signature de cette machine, ou valeur LocKy_i, et les valeurs chiffrées EncRemKy_i de signatures générées par la machine i pour chaque autre machine d'administration j de l'infrastructure.

À l'étape suivante 5508, la fonction incrémente le compteur de boucle j. À l'étape suivante 5510, la fonction vérifie que le compteur de boucle j a atteint sa valeur finale, laquelle correspond au nombre DomAdmMax. Si oui, alors le serveur a reçu un message de chacune des machines d'administration du domaine. Sinon, la fonction retourne à l'étape 5504 et attend un ou plusieurs messages d'autres machines d'administration.

Une fois que le serveur a reçu et traité les messages de l'ensemble des machines d'administration de l'infrastructure, c'est-à-dire que le test de l'étape 5510 est positif, le serveur commence une seconde structure de boucle initialisant un second compteur k à la valeur 0 (zéro) au cours d'une étape 5512.

À l'étape suivante 5514, le serveur crée une variable de calcul DomPubKy. La variable DomPubKy est initialisée à la valeur 1 (un).

Au cours d'une étape 5516, on calcule comme nouvelle valeur de la variable DomPubKy, l'ancienne valeur de cette variable DomPubKy que multiplie la clé publique locale de la machine d'administration k, ou clé LocKy_k.

L'étape suivante 5518 consiste à incrémenter le second compteur de boucle k. À l'étape suivante 5520 on vérifie que le compteur de boucle k a atteint sa valeur finale, laquelle correspond au nombre DomAdmMax.

Si oui, alors la fonction s'arrête à l'étape suivante 5522. Sinon, la fonction retourne en 5516.

Il résulte des étapes 5514 à 5520 une valeur finale de la variable DomPubKy qui correspond au produit des valeurs de clé locale LocKy_k respectives de chaque machine d'administration de l'infrastructure de séquestres.

La figure 16 illustre le domaine de séquestre 1 dans le second mode opérationnel, lequel correspond au dépôt d'un séquestre sur le serveur 10 depuis une machine cliente 40.

La machine cliente 40 reçoit du serveur un message comprenant des paramètres cryptographiques à usage dans le domaine, ou message DOM_CFG_CLT. Ces données comprennent notamment une valeur de clé publique à usage dans le domaine 1, c'est-à-dire à utiliser pour chiffrer un séquestre destiné à cette infrastructure. Il s'agit en particulier de la valeur finale de la variable DomPubKy.

La machine cliente 40 traite une suite d'octets de taille quelconque à séquestrer à l'aide des paramètres cryptographiques reçus et de paramètres locaux, puis émet un message contenant le séquestre à stocker à destination du serveur 10, ou message ADD_ESCRW.

La suite d'octets chiffrée correspond à ce que l'on appelle parfois un "secret" dans la technique. Le secret peut correspondre à une chaîne de caractères, un chiffre ou une suite de chiffres, un fichier ou une liste de fichiers.

La figure 17 illustre une fonction principale pour une machine cliente d'une infrastructure de séquestre, par exemple la machine 40 de la figure 16, dans le second mode opérationnel de l'infrastructure.

La fonction débute en une étape 700.

À l'étape suivante 702, la fonction reçoit le secret à traiter, par exemple une chaîne de caractères CltScrtStrg.

À l'étape suivante 704, la fonction génère aléatoirement une valeur entière CltSesKy, ici à l'aide d'une sous-fonction kygnrtr( ).

À l'étape suivante 706, la fonction chiffre la chaîne CltScrtStrg avec la valeur entière CltSesky. La fonction utilise un algorithme de chiffrement de type symétrique, par exemple du type AES. On obtient une chaîne chiffrée, ou chaîne EncCltScrtStrg. La valeur entière CltSesky correspond à une clé de session pour la machine cliente, c'est-à-dire que cette valeur entière n'est utilisée que pour le chiffrement d'une chaîne CltScrtStrg ou d'un nombre limité de chaînes analogues. Cette valeur CltSesKy est propre à la machine cliente.

À l'étape suivante 707, la fonction génère aléatoirement une valeur r comprise dans l'intervalle [1 .. p-2].

À l'étape suivante 708, la fonction chiffre la clé de session CltSesky avec la valeur DomPubky, qui correspond à une clé publique pour le domaine de séquestre. La fonction utilise une fonction de chiffrement de type El Gamal avec, en tant que paramètres, les valeurs de dimension p et de générateur g de l'infrastructure. Ces valeurs peuvent avoir été reçues du serveur en tant que paramètres cryptographiques ou intégrées directement dans la fonction.

Le chiffrement fait intervenir comme paramètre la valeur entière r générée aléatoirement en tant que clé privée.

Le séquestre comprend la forme chiffrée de la clé de session. Le séquestre comprend un premier chiffre Alpha qui vaut la valeur génératrice g du domaine élevé à la puissance r modulo p, et un second chiffre Beta qui correspond plus particulièrement à la forme chiffrée de la clé de session, calculée comme la clé publique à la puissance r que multiplie la clé de session CltSesky, le tout modulo p.

À l'étape suivante 710, la machine cliente émet un message à destination d'un contrôleur d'infrastructure, par exemple un message ADD_ESCRW. Le message contient un identifiant de la machine cliente, ou identifiant DomCltId, un identifiant de séquestre, par exemple sous la forme d'une chaîne CltEscwld, et le séquestre comprenant les valeurs Alpha et Beta correspondant à la valeur chiffrée EncCltSesKy de la clé de session CltSesKy. En option, le message peut en outre contenir la forme chiffrée EncCltScrtStrg de la chaîne CltScrtStrg, c'est-à-dire du secret de l'utilisateur de la machine cliente. D'une certaine manière, cette forme chiffrée peut être vue comme faisant également partie du séquestre.

La machine cliente est identifiée auprès du contrôleur d'infrastructure afin de recevoir les paramètres de fonctionnement de l'infrastructure, en particulier les valeurs des paramètres p et g et de la clé publique. La machine cliente, ou son utilisateur, ne sont pas nécessairement authentifiés. Autrement dit, le contrôleur ne conserve aucune donnée d'authentification relative à la machine cliente ou à son utilisateur.

La fonction s'arrête ensuite à l'étape 712.

À réception du message ADD_ESCRW, le contrôleur de l'infrastructure peut émettre un accusé de réception à destination de la machine cliente. Le serveur stocke le séquestre, en particulier dans un serveur de type stockage à froid, et les données relatives à la machine cliente.

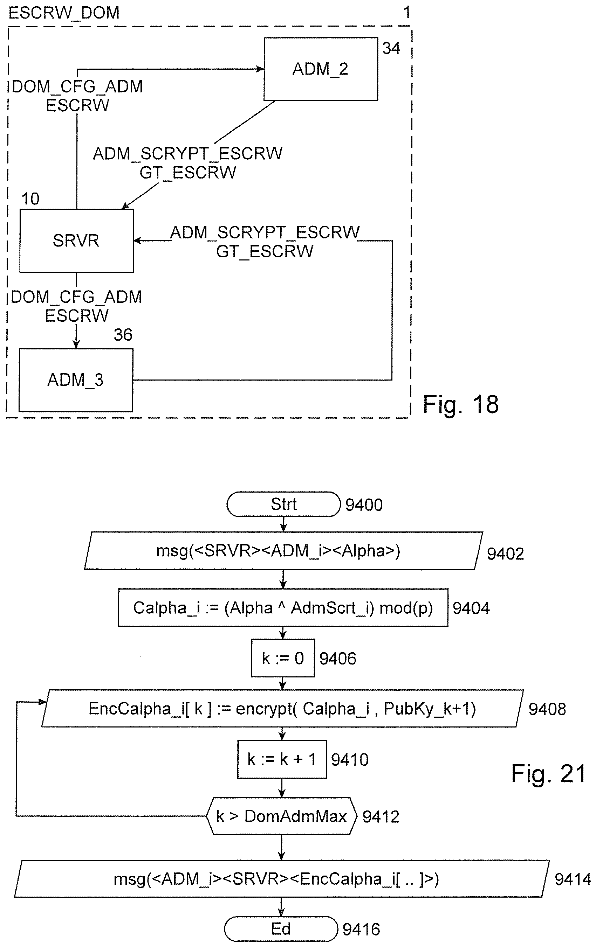

La figure 18 illustre le troisième mode opérationnel d'une infrastructure de séquestres telle que le domaine 1 de la figure 1.

Dans ce mode opérationnel, seul un sous-ensemble du groupe des machines d'administration du domaine 1 coopère en vue de recouvrer un séquestre numérique, par exemple les valeurs Alpha et Beta correspondant à la forme chiffrée de la clé CltSesKy. Dans l'exemple de la figure 18, il s'agit de la seconde machine d'administration 34 et de la troisième machine d'administration 36. Chacune des machines d'administration reçoit un message contenant les données de configuration cryptographiques du domaine, ou message DOM_CFG_ADM.

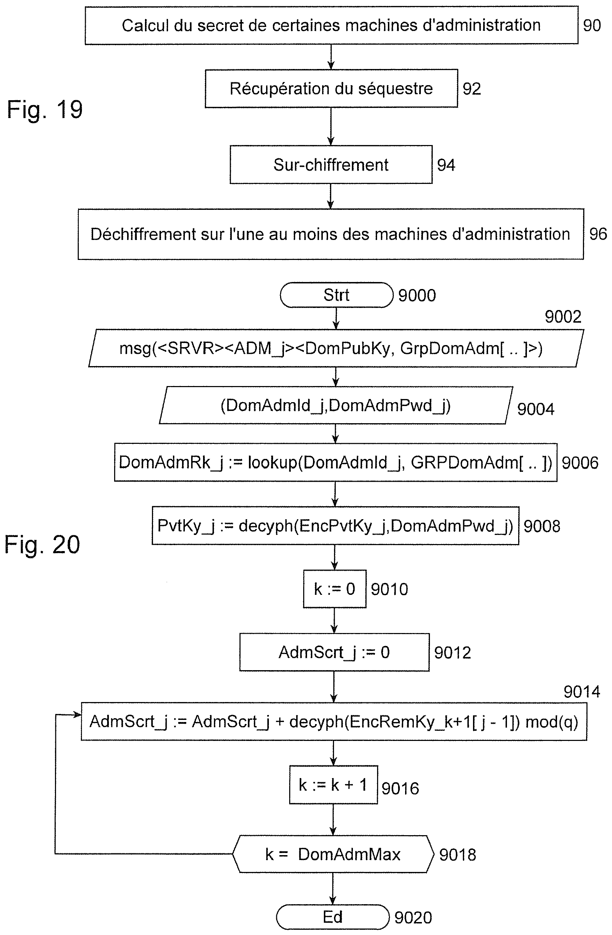

Le recouvrement de séquestre comprend quatre opérations principales. Dans une première opération, illustrée par le bloc 90 de la figure 19, certaines au moins des machines du groupe des machines d'administration, ici la seconde machine 32 et la troisième machine 36, calculent chacune une valeur supplémentaire respective à partir des données cryptographiques calculées pour elles par l'ensemble des autres machines d'administration de l'infrastructure de séquestre. Cette valeur supplémentaire est secrète puisqu'elle est calculée pour la première fois sur la machine d'administration concernée, à partir de valeurs secrètes calculées et chiffrées pour cette machine d'administration.

À l'opération suivante, représentée par le bloc 92, on récupère le séquestre, ou, à tout le moins, la valeur de Alpha.

Dans une opération suivante, représentée par le bloc 94, les machines d'administration qui ont calculé leur valeur secrète supplémentaire chiffrent une nouvelle fois la valeur Alpha. La valeur Alpha correspond à une partie du séquestre, en particulier une partie de la valeur chiffrée EncCltSesKy de la clé CltSesKy. Cette étape de chiffrement de la valeur Alpha peut être vue comme un sur-chiffrement.

Dans une opération suivante, représentée par le bloc 96, chaque machine d'administration ayant calculé une valeur secrète supplémentaire déchiffre le séquestre. Autrement dit, chacune de ces machines d'administration récupère la valeur de la clé de session CltSesKy. En option, certaines au moins de ces machines peuvent déchiffrer le secret EncCltScrtStrg.

La figure 20 illustre une seconde fonction principale pour une machine d'administration d'une infrastructure de séquestre et destinée au calcul d'une valeur secrète propre à cette machine, notée génériquement machine d'administration j, ou machine DomAdm_j.

La fonction débute en une étape 9000.

À l'étape suivante 9002, la fonction reçoit d'un contrôleur d'infrastructure un message contenant une valeur de clé publique à usage dans l'infrastructure, par exemple la clé DomPubKy, et les données relatives à des paramètres cryptographiques de l'infrastructure, par exemple regroupée dans un tableau du type du tableau GrpDomAdm. Il s'agit par exemple d'un message DOM_CFG_ADM. Les paramètres cryptographiques comprennent en particulier l'ensemble des valeurs secrètes calculées par chaque machine d'administration i pour les autres machines d'administration j du groupe des machines d'administration. Ici, chaque valeur secrète est chiffrée avec la clé publique de la machine d'administration à laquelle elle est destinée, c'est-à-dire dont la valeur entière a servi au calcul.

À l'étape suivante 9004, la fonction reçoit un code qui conditionne l'accès à la machine d'administration j, par exemple une chaîne analogue à la chaîne DomAdmPwd_j.

À l'étape suivante 9006, la fonction recherche dans les paramètres cryptographiques de l'infrastructure la valeur entière DomAdmRk_j correspondant à une machine d'administration j.

À l'étape suivante 9008, la fonction déchiffre la valeur EncPvtKy_j de la machine j grâce au mot de passe DomAdmPwd_j saisi à l'étape 9004. Il en résulte une valeur de clé privée correspondant à la machine d'administration j, ou clé PvtKy_j.

Les étapes 9004 à 9008 sont facultatives. Elles visent à retrouver la valeur de clé PvtKy_i de la machine i, telle qu'elle a été calculée à l'initialisation du domaine de séquestres.

A l'étape suivante 9010, la fonction commence une structure de boucle en initialisant un compteur k à la valeur 0 (zéro).

À l'étape suivante 9012, la fonction crée une variable de calcul AdmScrt_j pour la machine d'administration j qu'elle met à la valeur nulle.

À l'étape suivante 9014, la fonction attribue à la variable de calcul AdmScrt_j la valeur précédente de cette variable à laquelle elle ajoute la version déchiffrée de la valeur secrète calculée par la machine d'administration k pour la machine d'administration j. Ici, cette valeur correspond à l'élément d'index j-1 du tableau EncRemky_k+1.

À l'étape suivante étape 9016, la fonction incrémente le compteur k.

À l'étape suivante 9018, la fonction vérifie que le compteur k a atteint sa valeur finale, laquelle correspond au nombre DomAdmMax. Si oui, alors la fonction s'achève à l'étape suivante 9020. Sinon, la fonction retourne à l'étape 9014.

La valeur résultante AdmScrt_j correspond à une valeur secrète supplémentaire de la machine d'administration j calculée à partir des valeurs secrètes calculées pour cette machine j par les autres machines d'administration de l'infrastructure.

Dans une phase non détaillée, certaines au moins des machines d'administration envoient un message avec des identifiants correspondant aux séquestres, par exemple un nom d'utilisateur et un nom de séquestre. Il s'agit par exemple d'un message GET_ESCRW. En retour, un contrôleur de séquestres est agencé pour renvoyer la valeur Alpha à ces machines d'administration.

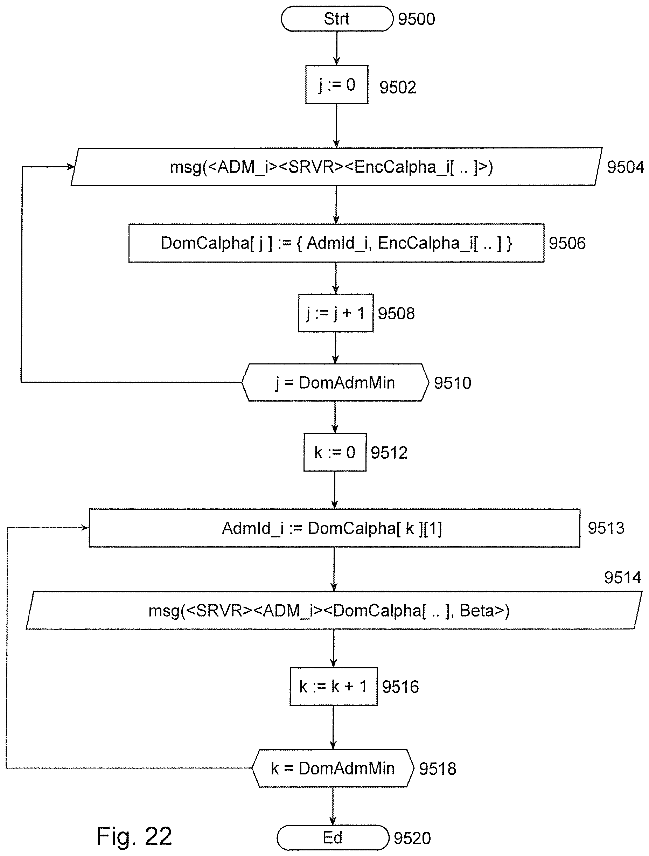

La figure 22 illustre une seconde fonction principale pour une machine d'administration d'une infrastructure de séquestres dans le troisième mode opérationnel de cette infrastructure, par exemple l'une de la seconde machine 34 et de la troisième machine 36 de la figure 18. Il s'agit de chiffrer une nouvelle fois une partie du séquestre, la valeur Alpha, avec une valeur secrète propre à la machine d'administration et établie à partir de valeurs secrètes calculées pour elle par les machines homologues du groupe des machines d'administration.
La fonction commence en une étape 9400.

À l'étape suivante 9402, la fonction reçoit un message comprenant la valeur Alpha correspondant à une partie d'un séquestre numérique. Typiquement, il s'agit d'une partie de la valeur chiffrée EncCltSesKy de la clé de session CltSesKy.

À l'étape suivante 9404, la fonction calcule une valeur chiffrée EncCalpha_i de la valeur Alpha avec une valeur secrète supplémentaire AdmScrt_i de la machine i. La fonction élève la valeur Alpha à une puissance correspondant à la valeur secrète supplémentaire AdmScrt_i de la machine i, le tout modulo p.

À l'étape suivante 9406, la fonction initie une structure de boucle en initialisant un compteur k à la valeur 0 (zéro).

À l'étape suivante 9408, la fonction calcule une valeur chiffrée de la valeur EncCalpha_i en utilisant la clé PubKy_k+1 correspondant à la machine d'administration k+1. Le résultat est par exemple stocké en tant qu'élément d'index k d'un tableau, noté ici tableau EncCalpha_i.

À l'étape suivante 9410, la fonction incrémente le compteur de boucle k.

À l'étape suivante 9412, la fonction vérifie que le compteur de boucle k a atteint sa valeur finale, laquelle correspond au nombre DomAdmMax.

Si oui, alors la fonction passe à l'étape suivante 9414. Sinon, la fonction retourne à l'étape 9408.

À l'issue des étapes 9406 à 9412, la fonction a établi une collection de valeurs chiffrées correspondant chacune à la valeur EncAlpha_i de Alpha chiffrée avec la valeur secrète supplémentaire de la machine i chiffrée à nouveau avec la clé publique PubKy_k d'une autre machine d'administration k de l'infrastructure. Ces étapes sont destinées à chiffrer l'échange des valeurs EncAlpha_i propres chacune à une machine d'administration respective de l'infrastructure entre les machines d'administration i à travers l'infrastructure. Ces étapes sont optionnelles.

À l'étape 9414, la machine d'administration i construit un message à destination du contrôleur de l'infrastructure, par exemple un message ADM_SCRYPT_ESCRW. Le message comprend la collection de valeurs EncCalpha_i_k, par exemple sous forme d'une liste EncAlpha_i indexée de valeurs dont un élément générique d'index k comprend une valeur de EncAlpha_i chiffrée avec la clé PubKy_k correspondant à la valeur d'index.

La fonction s'arrête ensuite, à l'étape 9416.

La figure 22 illustre une troisième fonction pour un contrôleur d'infrastructure de séquestres tel que le serveur 10 de la figure 18 dans le troisième mode opérationnel de cette infrastructure.

La fonction commence par une étape 9500.

À l'étape suivante 9502, la fonction initie une structure de boucle en initialisant un compteur j à la valeur 0 (zéro).

À l'étape suivante 9504, le serveur reçoit un message d'une machine d'administration i. Le message comprend la collection de valeurs chiffrées d'Alpha par la machine i chiffrées pour chaque autre machine d'administration de l'infrastructure de séquestres. Ici ces valeurs sont rassemblées dans un tableau du type du tableau EncCalpha_i[..]

À l'étape suivante 9506, la fonction crée un tableau destiné à contenir les valeurs chiffrées de Alpha pour le domaine, ou tableau DomCalpha. La fonction y mémorise la collection de valeurs calculées par la machine d'administration i, ou tableau EnCalpha_j en tant qu'élément d'index j, ici en relation avec un identifiant de cette machine, par exemple l'identifiant AdmId_i

À l'étape suivante 9508, la fonction incrémente le compteur de boucle j.

À l'étape suivante 9510, la fonction vérifie que le compteur de boucle j a atteint sa valeur finale, laquelle correspond au nombre DomAdmMin.

Si oui, alors la fonction a reçu et traité autant de messages que le nombre minimum de machines d'administration pour recouvrer un séquestre. La fonction poursuit alors avec l'étape 9512. Sinon, la fonction retourne à l'étape 9504.

À l'étape 9512, la fonction initie une structure de boucle en initialisant un second compteur k à la valeur 0 (zéro).

À l'étape suivante 9513, la fonction récupère un identifiant de la machine dont les données calculées sont stockées en tant qu'élément d'index k dans le tableau DomCalpha. Cet identifiant est celui de la machine d'administration i, génériquement noté AdmId_i.

À l'étape suivante 9514, la fonction commande l'émission d'un message à la machine d'administration k. Le message contient le tableau DomCalpha et la valeur Beta.

À l'étape suivante 9516, la fonction incrémente le second compteur de boucle k.

À l'étape suivante 9518, la fonction vérifie que le compteur k a atteint sa valeur finale, à savoir le nombre DomAdmMin.

Si oui, alors la fonction a émis un message à chaque machine d'administration impliquée dans le recouvrement d'un séquestre. Et la fonction s'arrête à l'étape suivante 9520. Sinon, la fonction retourne à l'étape 9513 pour émettre un message à destination d'une autre machine d'administration du séquestre.

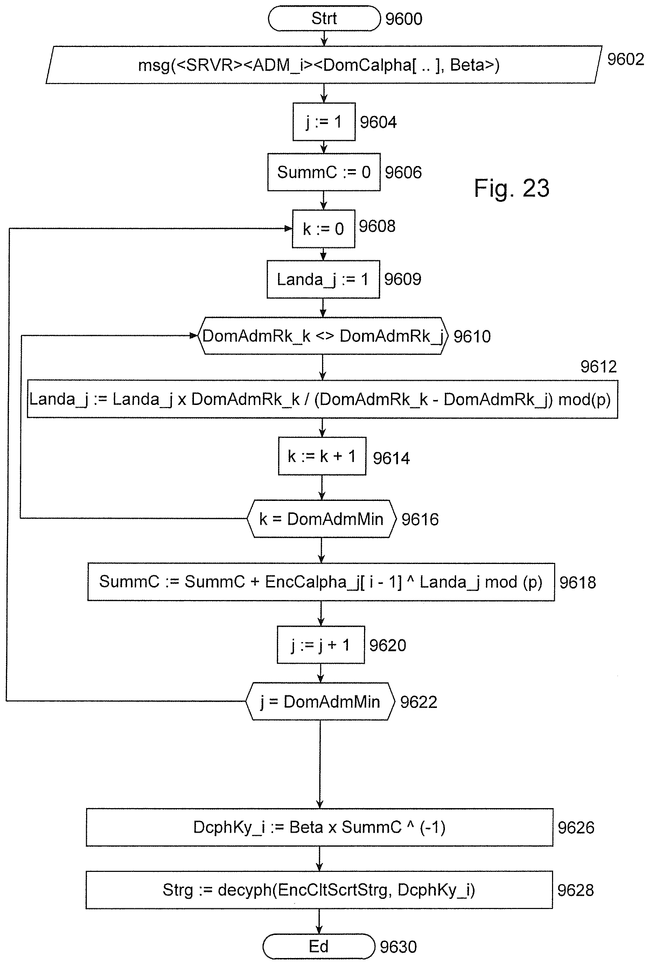

La figure 23 illustre une seconde fonction pour une machine d'administration à usage dans le déchiffrement du séquestre.

La fonction commence par une étape 9600.

À l'étape suivante 9602, la fonction reçoit un message d'un contrôleur d'une infrastructure de séquestres, par exemple le serveur 10 de la figure 18, contenant un ensemble de valeurs d'Alpha codées avec les valeurs secrètes des machines d'administration du séquestre, chaque valeur étant elle-même chiffrée avec une valeur de clé publique d'une machine d'administration. Ici, ces valeurs sont contenues dans un tableau du type du tableau DomCalpha. Le message peut en outre comprendre la partie Beta du séquestre numérique.

À l'étape suivante 9604, la fonction initie une structure de boucle en initialisant un premier compteur j à la valeur 1 (un).

À l'étape suivante 9606, la fonction crée une variable de calcul SummC qu'elle initialise à la valeur nulle.

À l'étape suivante 9608, la fonction commence une seconde structure de boucle, imbriquée dans la première, en initialisant un second compteur k à la valeur 0 (zéro).

À l'étape suivante 9609, la fonction initialise une seconde variable de calcul, ou variable Lambda_j, à la valeur 1 (un).

À l'étape suivante 9610, la fonction vérifie que la valeur entière DomAdmRk_k de la machine k diffère de celle DomAdmRk_j de la machine d'administration DomAdm_j. Si oui, alors la fonction calcule une valeur Lambda_j en multipliant la valeur antérieure de la variable Lambda_j par la valeur entière DomAdmRk_k correspondant à la machine DomAdm_k et en divisant le résultat par la valeur de la différence de la valeur entière DomAdmRk_k correspondant à la machine d'administration k et à celle DomAdmRk_j correspondant à la machine DomAdm_j, le tout modulo p.

A l'étape suivante 9614, la fonction incrémente le second compteur de boucle k.

À l'étape suivante 9616, la fonction vérifie que le compteur de boucle k a atteint sa valeur finale, laquelle correspond au nombre DomAdmMin. Si oui, alors la fonction poursuit par l'étape 9618. Sinon, la fonction retourne à l'étape 9610.

Les étapes 9608 à 9616 correspondent au calcul d'une valeur de coefficient de Lagrange à partir des valeurs entières DomAdmRk correspondant à la machine d'administration k et aux machines d'administration homologues d'un sous-ensemble au moins du groupe des machines d'administration.

À l'étape 9618, la fonction calcule SummC comme la valeur antérieure de la variable SummC à laquelle elle ajoute la valeur EncCalpha de Alpha chiffrée pour la machine d'administration i à la puissance Lambda_j.

À l'étape suivante 9620, la fonction incrémente le compteur de boucle j.

À l'étape suivante 9622, la fonction vérifie que le compteur de boucle j a atteint sa valeur finale, laquelle correspond au nombre DomAdmMin. Si oui, alors la fonction poursuit par l'étape 9626. Sinon, la fonction retourne à l'étape 9608.

À l'étape suivante 9626, la fonction calcule une version déchiffrée DcphKy_i de Beta pour la machine d'administration i. Cette valeur est calculée en multipliant la valeur Beta par la dernière valeur calculée de la variable SummC à la puissance moins un (-1).

À l'étape suivante 9628, la fonction retrouve la valeur secrète de l'utilisateur CltScrtStrg en déchiffrant la version chiffrée EncCltScrtStrg à l'aide de la clé de déchiffrement DcphKy_i. Cette clé de déchiffrement DcphKy_i correspond à la valeur entière utilisée pour le chiffrement symétrique du secret à traiter, par exemple la valeur CltSesKy décrite en relation avec la figure 17.

Puis la fonction s'arrête à l'étape suivante 9630.

Les étapes 9600 à 9630 peuvent être exécutées sur chacune des machines d'administration du séquestre du quorum, c'est-à-dire des machines ayant calculé une version surchiffrée d'Alpha.

Le déchiffrement implique un sous-ensemble de machines d'administration du domaine dont le cardinal correspond au nombre DomAdmMin. Le nombre DomAdmMin est défini en tant que paramètre. Il s'apparente à ce que l'on pourrait appeler un "quorum" de machines d'administration.

Dans ce processus de déchiffrement, le serveur de stockage du séquestre agit principalement pour mettre à disposition des machines d'administration du quorum les différentes parties Alpha et Beta du séquestre.

Dans une variante de réalisation, les machines d'administration sont agencées pour recouvrer uniquement la clé de session de la machine cliente, et pour communiquer cette valeur à la machine cliente.

On vient de décrire une infrastructure de séquestre dans laquelle des machines d'administration s'occupent du recouvrement de séquestres numériques et d'une partie de l'initialisation de cette infrastructure. Une machine comprend les éléments matériels et logiciels nécessaires au fonctionnement décrit. En particulier, les éléments logiciels peuvent être communs à certaines au moins des machines d'administration. Les machines d'administration se distinguent essentiellement les unes des autres par leur identifiant DomAdmId dans l'infrastructure. L'identifiant d'une machine d'administration peut être remplacé par un identifiant d'utilisateur dans la mesure où le contrôleur est capable de mettre en relation un identifiant utilisateur avec une adresse pour les messages, ou, dans une mesure analogue, par un identifiant logiciel

Le contrôle de l'accès à une machine d'administration est conditionné à la fourniture d'un code. En pratique, ce code peut être associé à un équivalent plus facilement mémorisable pour l'utilisateur. L'équivalent en question peut prendre des formes variées, telles qu'un fichier informatique, un certificat, un jeton, que l'on appelle "token" dans la technique, éventuellement stockés sur des supports à mémoire comme une carte à puce par exemple. L'équivalent peut aussi correspondre à des paramètres biométriques d'une personne, tels que des empreintes digitales par exemple

Le contrôleur ou le serveur de séquestres peuvent mettre à disposition les paramètres de la fonction cryptographique à usage dans le domaine.

Le serveur de séquestres est agencé pour stocker un séquestre comprenant les valeurs Alpha et Beta d'un chiffre El Gamal correspondant à une clé de chiffrement symétrique ainsi qu'en option la forme chiffrée symétriquement d'un secret. En variante, le serveur peut ne stocker qu'une partie de ce séquestre, par exemple les valeurs Alpha et Beta. Le serveur décrit assure une double fonction, à savoir (i) conserver sous forme chiffrée des secrets utilisateurs, (ii) conserve sous forme chiffrée les clés de chiffrement utilisées sur les secrets utilisateurs avec accès. L'utilisateur peut déchiffrer son secret s'il connaît la valeur de la clé de chiffrement. Dans le cas contraire, il peut requérir le recouvrement de cette clé à partir de sa forme chiffrée asymétriquement. Le recouvrement implique qu'un nombre prédéterminé de machines d'administration, ou quorum, accède à la forme chiffrée de la clé de chiffrement. C'est le serveur qui donne accès à cette forme chiffrée. Physiquement, le serveur peut correspondre à une machine dédiée à cette fonction ou une machine assurant en outre d'autres fonctions au sein de l'infrastructure, par exemple l'une des machines d'administration.

Les échanges de données cryptographiques entre machines d'administration, en particulier les valeurs secrètes, les clés secrètes ou encore le séquestre, se font ici par des échanges de message qui sont centralisés sur le contrôleur de séquestres. Cette architecture centralisée de l'infrastructure peut être délaissée au profit d'une architecture dans laquelle certains au moins des messages sont directement échangés entre machines du groupe de machines d'administration. Dans la description qui précède, la plupart des messages adressés par le serveur à une machine d'administration respective contiennent des données qui intéressent uniquement d'autres machines d'administration. La confidentialité de ces données est assurée par l'utilisation d'un chiffrement à l'aide de la clé publique de la machine d'administration intéressée par les données. En variante, le serveur n'adresse à chaque machine d'administration que les données qui intéressent cette machine.

On a décrit des machines d'administration homologues, c'est-à-dire qui sont capables de fonctionner, vis-à-vis de l'infrastructure, de manière analogue les unes aux autres. Des machines d'administration homologues peuvent matériellement différer les unes des autres. Dans une forme de réalisation actuellement préférée, chaque machine d'administration résulte de l'exécution sur une unité centrale d'ordinateur d'un produit de même programme informatique. On peut envisager cependant que certaines au moins des machines d'administration se distinguent les unes des autres par le produit en question.

On a décrit des machines d'administration ou cliente notamment qui mémorisent un jeu de paramètres relatif à une fonction de chiffrement pour le fonctionnement de l'infrastructure d'un séquestre. Ce stockage est à entendre ici dans un sens large, englobant par exemple des paramètres intégrés dans le programme correspondant au produit exécuté sur une unité centrale d'ordinateur, ou encore un stockage temporaire, limité à la durée nécessaire aux calculs de chiffrement/déchiffrement/recouvrement.

L'invention a été décrite sous la forme d'une infrastructure de séquestre comprenant notamment une ou plusieurs machines d'administration. Elle peut s'exprimer sous la forme d'un procédé d'administration d'un serveur de séquestres.

L'infrastructure décrite, ou ses variantes, présentent les particularités suivantes :
- Pour récupérer les données confidentielles du séquestre, une personne malveillante doit corrompre l'ensemble du quorum des machines d'administration
- L'infrastructure fonctionne sans clé maîtresse. Aucune clé de déchiffrement n'est reconstruite. Chaque machine d'administration sur-chiffre une partie au moins du séquestre avec une valeur secrète qui lui est propre.
- Dans l'hypothèse où l'infrastructure serait corrompue, il n'y aurait pas de divulgation d'informations concernant les machines d'administration ou les utilisateurs de ces machines, ni sur les secrets conservés par l'infrastructure en question.
- Seul un sous-ensemble des machines d'administration peut recouvrer le séquestre. Ces machines ou leurs utilisateurs n'ont pas besoin de connaître l'identité des uns ou des autres.
- Le serveur de séquestres, ou le contrôleur, ne maintient aucune clé temporaire ou partielle utile pour le recouvrement d'un séquestre. Aucune clé secrète n'est disponible sur le serveur, ni en mémoire, ni dans un fichier. Le serveur ne maintient que des données numériques chiffrées, sans aucun élément permettant leur déchiffrement.
- Toutes les opérations cryptographiques, y compris la génération aléatoire de paramètres de chiffrement, sont exécutées de manière distribuée sur des machines distinctes du serveur/contrôleur de séquestres. Le séquestre est chiffré sur la machine cliente.
- Aucun utilisateur de l'infrastructure ne peut recouvrer seul son secret, i.e. sans participation d'un quorum de machines d'administration. On évite ainsi tout vol de secret par usurpation d'identité.
- Les machines clientes, les machines d'administration et/ou la machine d'administration de niveau supérieur peuvent être mises en oeuvre sous la forme d'un même logiciel, ou produit de programme informatique, exécuté sur un ou plusieurs équipements informatiques, typiquement une unité centrale d'ordinateur. La fonction de la machine résultante dans l'infrastructure de séquestres peut être déterminée par des données d'identification relative à l'utilisateur, par exemple un couple identifiant/mot de passe. Dans ce cas, les données d'identification sont associées, par exemple dans le contrôleur de séquestres, à une fonction telle qu'administrateur ou super administrateur. Ceci ne s'applique pas nécessairement à la machine cliente, dans la mesure où son utilisateur, i.e. le client de l'infrastructure n'a pas à être authentifié.
- L'infrastructure fonctionne avec une clé publique pour le chiffrement de séquestres. Aucune clé privée n'est associée à cette clé publique. Le recouvrement est basé sur un sur-chiffrement à l'aide d'un secret partagé à la manière de Shamir.
- Les messages échangés entre les machines de l'infrastructure et le serveur/contrôleur sont chiffrés. Pour ce faire, chaque machine génère initialement de façon aléatoire une bi-clé de chiffrement dans un protocole asymétrique. Chaque machine possède la clé publique du serveur/contrôleur, en particulier codée dans le programme dont le produit exécutable sert à la mise en oeuvre de la machine.

L'invention n'est pas limitée aux modes de réalisation décrits ci-avant, mais englobe toutes les variantes que pourra envisager l'homme de l'art.

Des caractéristiques optionnelles, complémentaires, ou de remplacement, de la machine d'administration selon l'invention sont énoncés ci-après :
- La fonction de recouvrement est en outre agencée pour, en réponse à un message comprenant une partie au moins d'un séquestre numérique, calculer, avec la valeur secrète résultante propre à la machine d'administration, une version chiffrée de cette partie du séquestre numérique, construire au moins un message comprenant cette version chiffrée de la partie du séquestre numérique, et, en réponse à au moins un message comprenant des versions chiffrées de la partie du séquestre numérique, calculées avec certaines au moins des valeurs secrètes résultantes propres aux machines d'administration homologues du groupe de machines d'administration, recouvrer le séquestre à l'aide de certaines au moins de ces versions chiffrées.
- L'une au moins des premières valeurs secrètes, correspondant à une valeur entière correspondant à une machine d'administration homologue du groupe de machines d'administration, est comprise dans le ou les messages sous une forme chiffrée avec une valeur de clé publique correspondant à cette machine d'administration homologue.
- La fonction de recouvrement est agencée pour calculer, pour chaque machine d'administration homologue d'un sous-ensemble au moins du groupe de machines d'administration, une valeur de coefficient de Lagrange à partir des valeurs entières correspondant à la machine d'administration et aux machines d'administration homologues du sous-ensemble, et pour appliquer cette valeur de coefficient de Lagrange à la version chiffrée de la partie du séquestre numérique calculée avec la valeur secrète résultante propre à cette machine d'administration homologue.
- La fonction de recouvrement est en outre agencée pour traiter la partie du séquestre numérique à l'aide d'une valeur correspondant à la somme des versions chiffrées de la partie du séquestre numérique calculées respectivement avec les valeurs secrètes résultantes propres aux machines d'administration homologues dudit sous-ensemble, à chaque fois élevées à une puissance correspondant à une valeur respective de coefficient de Lagrange.
- Le séquestre numérique résulte d'un chiffrement de type El Gamal, dont la clé publique correspond à un produit de clés publiques calculées chacune à l'aide d'une valeur entière respective correspondant aux machines d'administration homologues du groupe de machines d'administration.

## Revendications

1. Machine d'administration (32) pour un serveur de séquestres numériques (10) comprenant :
- au moins une interface de communication (340) ;
- de la mémoire stockant (320) :
-- une liste de valeurs entières correspondant chacune à une machine respective (32;34;36) d'un groupe de machines d'administration (30) du serveur de séquestres numériques (10),
-- un jeu de paramètres relatif à une fonction de chiffrement pour réaliser un séquestre ;
- un calculateur capable d'exécuter :
-- une fonction polynomiale de degré inférieur ou égal au nombre de machines (32;34;36) du groupe de machines d'administration (30), la fonction polynomiale étant propre à la machine d'administration,
-- une fonction d'initialisation agencée pour :
--- appeler la fonction polynomiale avec chaque valeur entière de la liste pour obtenir une liste rangée de premières valeurs secrètes,
--- construire au moins un message (ADM_SHAR) comprenant, pour chaque machine d'administration homologue (34;36) du groupe de machines d'administration (30), au moins la première valeur secrète correspondant à la valeur entière de cette machine d'administration homologue (34;36),
--- en réponse à au moins un message (GET_DOM_CFG) comprenant, pour chaque machine d'administration homologue (34;36) du groupe de machines d'administration (30), au moins une seconde valeur secrète obtenue de l'appel de la fonction polynômiale de cette machine d'administration homologue (34;36) sur la valeur entière de la machine d'administration (32), construire une valeur secrète résultante propre à la machine d'administration (32) à partir des premières et secondes valeurs secrètes,
-- une fonction de recouvrement agencée pour traiter une partie au moins d'un séquestre numérique en utilisant la valeur secrète résultante propre à la machine d'administration (32) et des valeurs secrètes résultantes propres aux machines d'administration homologues (34;36) du groupe de machines d'administration (30).

2. Machine selon la revendication 1, dans laquelle la fonction de recouvrement est en outre agencée pour :
--- en réponse à un message comprenant une partie au moins d'un séquestre numérique, calculer, avec la valeur secrète résultante propre à la machine d'administration (32), une version chiffrée de cette partie du séquestre numérique,
--- construire au moins un message (ADM_SCRYPT_ESCRW) comprenant cette version chiffrée de la partie du séquestre numérique, et
--- en réponse à au moins un message (DOM_CFG_ADM) comprenant des versions chiffrées de la partie du séquestre numérique, calculées avec certaines au moins des valeurs secrètes résultantes propres aux machines d'administration homologues (34;36) du groupe de machines d'administration (30), recouvrer le séquestre à l'aide de certaines au moins de ces versions chiffrées.

3. Machine selon l'une des revendications 1 et 2, dans laquelle la fonction d'initialisation est agencée pour :
--- calculer une valeur de clé publique à partir d'une valeur constante de la fonction polynômiale, et
--- construire au moins un message (DOM_CFG_CLT) comprenant cette valeur de clé publique.

4. Machine selon l'une des revendications précédentes, dans laquelle l'une au moins des premières valeurs secrètes, correspondant à une valeur entière correspondant à une machine d'administration homologue (34;36) du groupe de machines d'administration (30), est comprise dans le ou les messages (ADM_SHAR;GET_DOM_CFG) sous une forme chiffrée avec une valeur de clé publique correspondant à cette machine d'administration homologue (34;36).

5. Machine selon l'une des revendications précédentes, dans laquelle la fonction de recouvrement est agencée pour traiter la partie du séquestre numérique qui correspond à une valeur alpha d'un chiffrement de type El Gamal.

6. Machine selon l'une des revendications précédentes, dans laquelle la fonction de recouvrement est agencée pour calculer, pour chaque machine d'administration homologue (34;36) d'un sous-ensemble (32;34) au moins du groupe de machines d'administration (30), une valeur de coefficient de Lagrange à partir des valeurs entières correspondant à la machine d'administration et aux machines d'administration homologues (34;36) du sous-ensemble (32;34), et pour appliquer cette valeur de coefficient de Lagrange à la version chiffrée de la partie du séquestre numérique calculée avec la valeur secrète résultante propre à cette machine d'administration homologue (34;36).

7. Machine selon la revendication 6, dans laquelle la fonction de recouvrement est en outre agencée pour traiter la partie du séquestre numérique à l'aide d'une valeur correspondant à la somme des versions chiffrées de la partie du séquestre numérique calculées respectivement avec les valeurs secrètes résultantes propres aux machines d'administration homologues (34;36) dudit sous-ensemble (32;34), à chaque fois élevées à une puissance correspondant à une valeur respective de coefficient de Lagrange.

8. Machine selon l'une des revendications précédentes, dans laquelle le séquestre numérique résulte d'un chiffrement de type El Gamal, dont la clé publique correspond à un produit de clés publiques calculées chacune à l'aide d'une valeur entière respective correspondant aux machines d'administration homologues (34;36) du groupe de machines d'administration (30).

9. Machine selon l'une des revendications précédentes, comprenant une fonction de génération aléatoire de nombres, dans laquelle la fonction d'initialisation est agencée pour appeler répétitivement la fonction de génération aléatoire de nombres pour établir certains au moins des coefficients de la fonction polynomiale, préalablement à l'appel de cette dernière.

10. Machine selon l'une des revendications précédentes, dans laquelle la fonction polynomiale présente un degré inférieur au nombre de machines (32;34;36) du groupe de machines d'administration (30).

11. Infrastructure d'échange et de traitement de séquestres numériques comprenant un serveur de séquestres (10) et un groupe de machines d'administration (30) comprenant au moins deux machines d'administration selon l'une des revendications précédentes pour le serveur de séquestres, les deux machines d'administration (32;34;36) étant homologues l'une de l'autre.

12. Infrastructure selon la revendication 11, dans laquelle une valeur de clé publique pour le dépôt de séquestres numériques résulte de valeurs de clés publiques correspondant chacune à une valeur entière correspondant à une machine d'administration (32;34;36) respective du groupe de machines d'administration (30).

13. Infrastructure selon l'une des revendications 11 et 12 comprenant une machine cliente (40) comprenant au moins une interface de communication (440), de la mémoire (420) stockant au moins une donnée numérique secrète, et un calculateur capable d'exécuter une fonction de chiffrement agencée pour générer aléatoirement une clé locale et pour chiffrer symétriquement la donnée numérique secrète en utilisant la clé locale.

14. Infrastructure selon la revendication 13, dans laquelle la machine cliente (40) mémorise un jeu de paramètres relatif à un algorithme de chiffrement pour réaliser un séquestre et dans laquelle la fonction de chiffrement de la machine cliente (40) est agencée pour construire un message comprenant la clé locale chiffrée conformément audit jeu de paramètres.

15. Procédé d'administration d'un serveur de séquestres numériques comprenant :
--- sur chaque machine (32;34;36) d'un groupe de machines d'administration (30), appeler une fonction polynomiale respective de degré inférieur ou égal au nombre de machines du groupe de machines d'administration (30) avec chaque valeur d'une liste de valeurs entières correspondant chacune à une machine (32;34;36) respective du groupe de machines d'administration (30) pour obtenir une liste de valeurs secrètes,
--- sur chaque machine (32;34;36) du groupe de machines d'administration (30), construire au moins un message comprenant au moins une valeur secrète correspondant à la valeur entière d'une machine (32;34;36) d'administration destinataire,
-- sur chaque machine (32;34;36) du groupe de machines d'administration (30), construire une valeur secrète résultante propre à cette machine (32;34;36) à partir des valeurs secrètes calculées, par les autres machines (32;34;36) du groupe de machines d'administration (30), pour la valeur entière correspondant à la machine d'administration (32;34;36),
-- sur certaines au moins des machines (32;34;36) du groupe de machines d'administration (30), déchiffrer un séquestre numérique en utilisant cette valeur secrète résultante et les valeurs secrètes résultantes de machines d'administration homologues (32;34;36).

16. Produit de programme informatique susceptible de coopérer avec une unité centrale d'ordinateur pour constituer une machine d'administration selon l'une des revendications 1 à 10.

## Patentansprüche

1. Maschine zur Administration (32) für einen digitalen Hinterlegungsserver (10), umfassend:
- mindestens eine Kommunikationsschnittstelle (340);
- des Speichers zum Speichern (320):
-- einer Liste von ganzzahligen Werten, die jeweils einer entsprechenden Maschine (32; 34; 36) einer Gruppe von Maschinen zur Administration (30) für einen digitalen Hinterlegungsserver (10) entsprechen,
-- eines Satzes von Parametern, die sich auf eine Verschlüsselungsfunktion beziehen, um eine Hinterlegung durchzuführen;
- einen Rechner, der in der Lage ist, Folgendes auszuführen:
-- eine Polynomfunktion mit einem Grad, der kleiner oder gleich der Anzahl der Maschinen (32; 34; 36) der Gruppe von Maschinen zur Administration (30) ist, wobei die Polynomfunktion spezifisch für die Maschine zur Administration ist,
-- eine Initialisierungsfunktion, die eingerichtet ist zum:
--- Aufrufen der Polynomfunktion mit jedem ganzzahligen Wert in der Liste, um eine Liste der ersten Geheimwerte zu erhalten,
--- Erstellen mindestens einer Nachricht (ADM_SHAR), die für jede homologe Maschine zur Administration (34; 36) der Gruppe von Maschinen zur Administration (30) mindestens den ersten Geheimwert entsprechend dem ganzzahligen Wert dieser homologen Maschine zur Administration (34; 36) umfasst,
--- als Reaktion auf mindestens eine Nachricht (GET_DOM_CFG), die für jede homologe Maschine zur Administration (34; 36) der Gruppe von Maschinen zur Administration (30) mindestens einen zweiten Geheimwert umfasst, der aus dem Aufruf der Polynomfunktion dieser homologen Maschine zur Administration (34; 36) auf dem ganzzahligen Wert der Maschine zur Administration (32) erhalten wird, Erstellen eines resultierenden für die Maschine zur Administration (32) spezifischen Geheimwerts aus dem ersten und zweiten Geheimwert,
-- eine Wiederherstellungsfunktion, die eingerichtet ist, um mindestens einen Teil einer digitalen Hinterlegung unter Verwendung des resultierenden, für die Maschine zur Administration (32) spezifischen Geheimwerts und der resultierenden, für die homologen Maschinen zur Administration (34; 36) der Gruppe von Maschinen zur Administration (30) spezifischen Geheimwerte zu verarbeiten.

2. Maschine nach Anspruch 1, in welcher die Wiederherstellungsfunktion ferner eingerichtet ist zum:
--- als Reaktion auf eine Nachricht, die mindestens einen Teil einer digitalen Hinterlegung umfasst, Berechnen einer verschlüsselten Version dieses Teils der digitalen Hinterlegung mit dem resultierenden, für die Maschine zur Administration (32) spezifischen Geheimwert,
--- Erstellen mindestens einer Nachricht (ADM_SCRYPT_ESCRW), die diese verschlüsselte Version des Teils der digitalen Hinterlegung umfasst, und
--- als Reaktion auf mindestens eine Nachricht (DOM_CFG_ADM), die verschlüsselte Versionen des Teils der digitalen Hinterlegung umfasst, die mit mindestens einigen der resultierenden Geheimwerten berechnet sind, die spezifisch für die homologen Maschinen zur Administration (34; 36) der Gruppe von Maschinen zur Administration (30) sind, Wiederherstellen der Hinterlegung unter Verwendung mindestens einiger dieser verschlüsselten Versionen.

3. Maschine nach einem der Ansprüche 1 und 2, in welcher die Initialisierungsfunktion eingerichtet ist zum:
--- Berechnen eines öffentlichen Schlüsselwertes aus einem konstanten Wert der Polynomfunktion, und
--- Erstellen mindestens einer Nachricht (DOM_CFG_CLT), die diesen öffentlichen Schlüsselwert umfasst.

4. Maschine nach einem der vorhergehenden Ansprüche, in welcher mindestens einer der ersten Geheimwerte, der einem ganzzahligen Wert entspricht, der einer homologen Maschine zur Administration (34; 36) der Gruppe von Maschinen zur Administration (30) entspricht, in der/den Nachricht(en) (ADM_SHAR; GET_DOM_CFG) in verschlüsselter Form mit einem öffentlichen Schlüsselwert, der dieser homologen Maschine zur Administration (34; 36) entspricht, umfasst ist.

5. Maschine nach einem der vorhergehenden Ansprüche, in welcher die Wiederherstellungsfunktion eingerichtet ist, um den Teil der digitalen Hinterlegung zu verarbeiten, der einem Alpha-Wert einer Verschlüsselung vom El Gamal-Typ entspricht.

6. Maschine nach einem der vorhergehenden Ansprüche, in welcher die Wiederherstellungsfunktion eingerichtet ist, um für jede homologe Maschine zur Administration (34; 36) einer Teilmenge (32; 34) mindestens der Gruppe von Maschinen zur Administration (30) einen Lagrange-Koeffizientenwert aus den Ganzzahlenwerten zu berechnen, die der Maschine zur Administration und den homologen Maschinen zur Administration (34; 36) der Teilmenge (32; 34) entsprechen, und diesen Lagrange-Koeffizientenwert auf die verschlüsselte Version des Teils der digitalen Hinterlegung anzuwenden, der mit dem resultierenden Geheimwert berechnet wird, der spezifisch für diese homologe Maschine zur Administration (34; 36) ist.

7. Maschine nach Anspruch 6, in welcher die Wiederherstellungsfunktion ferner eingerichtet ist, um den Teil der digitalen Hinterlegung unter Verwendung eines Wertes zu verarbeiten, welcher der Summe der verschlüsselten Versionen des Teils der digitalen Hinterlegung entspricht, die jeweils mit den resultierenden Geheimwerten berechnet werden, die für die homologen Maschinen zur Administration (34; 36) der Teilmenge (32; 34) spezifisch sind, jedes Mal, wenn sie auf eine Leistung angehoben werden, die einem jeweiligen Lagrange-Koeffizientenwert entspricht.

8. Maschine nach einem der vorhergehenden Ansprüche, in welcher die digitale Hinterlegung aus einer Verschlüsselung vom El Gamal-Typ resultiert, deren öffentlicher Schlüssel einem Produkt von öffentlichen Schlüsseln entspricht, die jeweils unter Verwendung eines entsprechenden ganzzahligen Wertes berechnet werden, der den homologen Maschinen zur Administration (34; 36) der Gruppe von Maschinen zur Administration (30) entspricht.

9. Maschine nach einem der vorhergehenden Ansprüche, umfassend eine Funktion zur Erzeugung von Zufallszahlen, in welcher die Initialisierungsfunktion eingerichtet ist, um die Funktion zur Erzeugung von Zufallszahlen wiederholt aufzurufen, um mindestens einige der Koeffizienten der Polynomfunktion festzulegen, bevor diese aufgerufen wird.

10. Maschine nach einem der vorhergehenden Ansprüche, in welcher die Polynomfunktion einen niedrigeren Grad aufweist als die Anzahl der Maschinen (32; 34; 36) der Gruppe von Maschinen zur Administration (30).

11. Infrastruktur zum Austauschen und Verarbeiten von digitaler Hinterlegung, umfassend einen Hinterlegungsserver (10) und eine Gruppe von Maschinen zur Administration (30), umfassend mindestens zwei Maschinen zur Administration nach einem der vorhergehenden Ansprüche für den Hinterlegungsserver, wobei die beiden Maschinen zur Administration (32; 34; 36) homolog zueinander sind.

12. Infrastruktur nach Anspruch 11, in welcher sich ein öffentlicher Schlüsselwert zum Ablegen digitaler Hinterlegungen aus öffentlichen Schlüsselwerten resultiert, die jeweils einem ganzzahligen Wert entsprechen, der einer jeweiligen Maschine zur Administration (32; 34; 36) der jeweiligen Gruppe von Maschinen zur Administration (30) entspricht.

13. Infrastruktur nach einem der Ansprüche 11 und 12, umfassend eine Client-Maschine (40), die mindestens eine Kommunikationsschnittstelle (440), einen Speicher (420), der mindestens eine geheime digitale Angabe speichert, und einen Rechner, der in der Lage ist, eine Verschlüsselungsfunktion auszuführen, die eingerichtet ist, um zufällig einen lokalen Schlüssel zu erzeugen und die geheime digitale Angabe symmetrisch mit dem lokalen Schlüssel zu verschlüsseln.

14. Infrastruktur nach Anspruch 13, in welcher die Client-Maschine (40) einen Parametersatz in Bezug auf einen Verschlüsselungsalgorithmus speichert, um eine Hinterlegung durchzuführen, und in welcher die Verschlüsselungsfunktion der Client-Maschine (40) eingerichtet ist, um eine Nachricht zu erstellen, die den verschlüsselten lokalen Schlüssel gemäß dem Parametersatz enthält.

15. Verfahren zur Administration eines digitalen Hinterlegungsservers, umfassend:
--- auf jeder Maschine (32; 34; 36) einer Gruppe von Maschinen zur Administration (30), Aufrufen einer entsprechenden Polynomfunktion mit einem Grad kleiner oder gleich der Anzahl von Maschinen der Gruppe von Maschinen zur Administration (30) mit jedem Wert einer Liste von ganzzahligen Werten, die jeweils einer entsprechenden Maschine (32; 34; 36) der Gruppe von Maschinen zur Administration (30) entsprechen, um eine Liste von Geheimwerten zu erhalten,
--- auf jeder Maschine (32; 34; 36) der Gruppe von Maschinen zur Administration (30), Erstellen mindestens einer Nachricht, die mindestens einen Geheimwert umfasst, der dem ganzzahligen Wert einer Empfänger-Maschine zur Administration (32; 34; 36) entspricht,
--- auf jeder Maschine (32; 34; 36) der Gruppe von Maschinen zur Administration (30), Erstellen eines resultierenden, für diese Maschine (32; 34; 36) spezifischen Geheimwerts aus den von den anderen Maschinen (32; 34; 36) der Gruppe von Maschinen zur Administration (30) berechneten Geheimwerten für den der Maschine zur Administration (32; 34; 36) entsprechenden ganzzahligen Wert,
--- auf mindestens einigen der Maschinen (32; 34; 36) der Gruppe von Maschinen zur Administration (30), Entschlüsseln einer digitale Hinterlegung unter Verwendung dieses resultierenden Geheimwertes und der resultierenden Geheimwerte von homologen Maschinen zur Administration (32; 34; 36).

16. Computerprogrammprodukt, das mit einer zentralen Computereinheit zusammenarbeiten kann, um eine Maschine zur Administration nach einem der Ansprüche 1 bis 10 darzustellen.

## Claims

1. An administration machine (32) for a digital escrow server (10) comprising:
- at least one communication interface (340);
- memory storing (320):
- a list of integer values each corresponding to a respective machine (32;34;36) of a group of administration machines (30) of the digital escrow server (10),
- a set of parameters relating to an encryption function for creating an escrow;
- a calculator capable of executing:
- a polynomial function of a degree less than or equal to the number of machines (32;34;36) of the group of administration machines (30), the polynomial function being specific to the administration machine,
- an initialization function arranged for:
- calling the polynomial function with each integer value of the list for obtaining an ordered list of first secret values,
- constructing at least one message (ADM_SHAR) comprising, for each homologous administration machine (34;36) of the group of administration machines (30), at least the first secret value corresponding to the integer value of this homologous administration machine (34;36),
- in response to at least one message (GET_DOM_CFG), comprising, for each homologous administration machine (34;36) of the group of administration machines (30), at least one second secret value obtained from calling the polynomial function of this homologous administration machine (34;36) on the integer value of the administration machine (32), constructing a resulting secret value specific to the administration machine (32) from the first and second secret values,
- a recovery function arranged for processing at least one part of a digital escrow by using the resulting secret value specific to the administration machine (32) and resulting secret values specific to the homologous administration machines (34;36) of the group of administration machines (30).

2. The machine as claimed in claim 1, in which the recovery function is further arranged for:
- in response to a message comprising at least one part of a digital escrow, calculating, with the resulting secret value specific to the administration machine (32), an encrypted version of this part of the digital escrow,
- constructing at least one message (ADM_SCRYPT_ESCRW) comprising this encrypted version of the part of the digital escrow, and
- in response to at least one message (DOM_CFG_ADM) comprising encrypted versions of the part of the digital escrow, calculated with at least some of the resulting secret values specific to the homologous administration machines (34;36) of the group of administration machines (30), recovering the escrow with the aid of at least some of these encrypted versions.

3. The machine as claimed in one of claims 1 and 2, in which the initialization function is arranged for:
- calculating a public key value from a constant value of the polynomial function, and
- constructing at least one message (DOM_CFG_CLT) comprising this public key value.

4. The machine as claimed in one of the preceding claims, in which the at least one of the first secret values, corresponding to an integer value corresponding to a homologous administration machine (34;36) of the group of administration machines (30), is comprised in the message or messages (ADM_SHAR;GET_DOM_CFG) in an encrypted form with a public key value corresponding to this homologous administration machine (34;36).

5. The machine as claimed in one of the preceding claims, in which the recovery function is arranged for processing the part of the digital escrow which corresponds to value Alpha of an ElGamal type of encryption.

6. The machine as claimed in one of the preceding claims, in which the recovery function is arranged for calculating, for each homologous administration machine (34;36) of at least one subset (32;34) of the group of administration machines (30), a Lagrange coefficient value from the integer values corresponding to the administration machine and to the homologous administration machines (34;36) of the subset (32;34), and for applying this Lagrange coefficient value to the encrypted version of the part of the digital escrow calculated with the resulting secret value specific to this homologous administration machine (34;36).

7. The machine as claimed in claim 6, in which the recovery function is further arranged for processing the part of the digital escrow with the aid of a value corresponding to the sum of the encrypted versions of the part of the digital escrow calculated respectively with the resulting secret values specific to the homologous administration machines (34;36) of said subset (32;34), each time raised to a power corresponding to a respective Lagrange coefficient value.

8. The machine as claimed in one of the preceding claims, in which the digital escrow results from an ElGamal encryption type, the public key of which corresponds to a product of public keys each calculated with the aid of a respective integer value corresponding to the homologous administration machines (34;36) of the group of administration machines (30).

9. The machine as claimed in one of the preceding claims, comprising a random number generation function, in which the initialization function is arranged for repeatedly calling the random number generation function for establishing at least some of the coefficients of the polynomial function, prior to calling the latter.

10. The machine as claimed in one of the preceding claims, in which the polynomial function exhibits a degree less than the number of machines (32;34;36) of the group of administration machines (30).

11. An infrastructure for exchanging and processing digital escrows comprising an escrow server (10) and a group of administration machines (30) comprising at least two administration machines as claimed in one of preceding claims for the escrow server, the two administration machines (32;34;36) being homologous with each other.

12. The infrastructure as claimed in claim 11, in which a public key value for depositing digital escrows results from public key values each corresponding to an integer value corresponding to a respective administration machine (32;34;36) of the group of administration machines (30).

13. The infrastructure as claimed in claims 11 and 12 comprising a client machine (40) comprising at least one communication interface (440), memory (420) storing at least one piece of secret digital data, and a calculator capable of executing an encryption function arranged for randomly generating a local key and for symmetrically encrypting the secret piece of digital data by using the local key.

14. The infrastructure as claimed in claim 13, in which the client machine (40) stores a set of parameters relating to an encryption algorithm for creating an escrow and in which the encryption function of the client machine (40) is arranged for constructing a message comprising the local key encrypted in accordance with said set of parameters.

15. A method for administering a digital escrow server comprising:
- on each machine (32;34;36) of a group of administration machines (30), calling a respective polynomial function of a degree less than or equal to the number of machines of the group of administration machines (30) with each value of a list of integer values each corresponding to a respective machine (32;34;36) of the group of administration machines (30) for obtaining a list of secret values,
- on each machine (32;34;36) of the group of administration machines (30), constructing at least one message comprising at least one secret value corresponding to the integer value of a recipient administration machine (32;34;36),
- on each machine (32;34;36) of the group of administration machines (30), constructing a resulting secret value specific to this machine (32;34;36) from the secret values calculated, by the other machines (32;34;36) of the group of administration machines (30), for the integer value corresponding to the administration machine (32;34;36),
- on at least some of the machines (32;34;36) of the group of administration machines (30), decrypting a digital escrow by using this resulting secret value and the resulting secret values of homologous administration machines (32;34;36).

16. A computer program product, capable of cooperating with a central computer unit for forming an administration machine as claimed in one of claims 1 through 10.
